(19) Europäisches Patentamt
European Patent Office
Office européen des brevets

(11) EP 4 096 131 B1

(12) EUROPEAN PATENT SPECIFICATION

(45) Date of publication and mention of the grant of the patent:
**10.09.2025 Bulletin 2025/37**

(21) Application number: **21759914.1**

(22) Date of filing: **25.02.2021**

(51) International Patent Classification (IPC):
***H04L 1/18*** (2023.01) ***H04L 5/00*** (2006.01)
***H04W 72/04*** (2023.01) ***H04W 4/40*** (2018.01)
***H04L 1/1867*** (2023.01)

(52) Cooperative Patent Classification (CPC):
**H04W 4/40; H04L 1/1822; H04L 1/1835; H04L 1/1896;** H04W 72/23

(86) International application number:
**PCT/KR2021/002388**

(87) International publication number:
**WO 2021/172899 (02.09.2021 Gazette 2021/35)**

# (54) SOFT BUFFER MANAGEMENT METHOD AND DEVICE OF TERMINAL IN COMMUNICATION SYSTEM

VERFAHREN UND VORRICHTUNG ZUR VERWALTUNG DES WEICHEN PUFFERS EINES ENDGERÄTES IN EINEM KOMMUNIKATIONSSYSTEM

PROCÉDÉ ET DISPOSITIF DE GESTION DE TAMPON MOU D’UN TERMINAL DANS UN SYSTÈME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2020 KR 20200024288**

(43) Date of publication of application:
**30.11.2022 Bulletin 2022/48**

(73) Proprietor: **Samsung Electronics Co., Ltd.**
**Suwon-si, Gyeonggi-do 16677 (KR)**

(72) Inventors:
- **GHA, Heedon**
  **Suwon-si, Gyeonggi-do 16677 (KR)**
- **YEO, Jeongho**
  **Suwon-si, Gyeonggi-do 16677 (KR)**
- **KIM, Taehyoung**
  **Suwon-si, Gyeonggi-do 16677 (KR)**
- **RYU, Hyunseok**
  **Suwon-si, Gyeonggi-do 16677 (KR)**
- **BANG, Jonghyun**
  **Suwon-si, Gyeonggi-do 16677 (KR)**
- **OH, Jinyoung**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(56) References cited:
**WO-A1-2020/014481 KR-A- 20150 002 579**
**KR-A- 20190 018 766 KR-A- 20190 055 225**

- **MEDIATEK INC: "Summary of 7.2.5.4 on more delay-tolerant re-transmission mechanisms in NR-NTN", 25 November 2019, 3GPP DRAFT; R1-1913369, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP051830650**
- **OPPO: "Impacts of disabling HARQ on LCP", 3 October 2019, 3GPP DRAFT; R2-1913338, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP051804215**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- OPPO: "Left issues on HARQ configuration for NTN", 13 May 2019, 3GPP DRAFT; R2-1905579 - DISCUSSION ON HARQ PROCEDURE FOR NTN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP051729083
- "3 Generation Partnership Project; Technical Specification Group Radio Access Network; Evolved Universal Terrestrial Radio Access (E-UTRA); Multiplexing and channel coding (Release 16)", 3GPP STANDARD; TECHNICAL SPECIFICATION; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V16.0.0, 14 January 2020 (2020-01-14), Mobile Competence Centre ; 650, route des Lucioles ; F-06921 Sophia-Antipolis Cedex ; France, pages 1 - 250, XP051860749

## Description

### [Technical Field]

The disclosure relates to a communication system, and pertains to a method and a device wherein, when data is transmitted from a base station to a terminal or from the terminal to the base station, a soft buffer size required by the terminal or the base station is minimized. More specifically, the disclosure provides a method for calculating a TBS (transport block size) of transmitted data and a method for determining rate matching for coded data.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems. In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

In a wireless communication system, when a transmission terminal transmits data to a reception terminal, a soft buffer for storing reception values of the corresponding data is used for a HARQ operation.

The technical document R1-1913369 on 3GPP TSG RAN WG1 Meeting #99 disclosed a more delay-tolerant re-transmission mechanisms in NR-NTN.

### [Disclosure of Invention]

### [Technical Problem]

In the case of a long latency time from data transmission to reception, a large number of HARQ process IDs may be used. In this case, a method for efficiently using a soft buffer is required, and the disclosure provides a method and a device for efficiently using a soft buffer.

### [Solution to Problem]

In order to solve the problems described above, a first aspect provides a method of a terminal in a communication system as defined by the appended set of claims.

A second aspects provides a method of a base station in a communication system as defined by the appended set of claims.

A third aspect provides a terminal of a communication system as defined by the appended set of claims.

A fourth aspect provides a base station of a communication system as defined by the appended set of claims.

**[Advantageous Effects of Invention]**

By using the disclosure as described above, a HARQ process may be efficiently managed.

**[Brief Description of Drawings]**

FIG. 1 is a diagram illustrating a basic structure of a time-frequency domain of an NR system;
FIG. 2 is a diagram illustrating an example in which eMBB, URLLC, and mMTC data are assigned to the entire system frequency band;
FIG. 3 is a diagram illustrating an example in which eMBB, URLLC, and mMTC data are assigned to divided system frequency bands;
FIG. 4 is a diagram illustrating an example of a process in which one transport block is divided into several code blocks, and CRCs are added thereto;
FIG. 5A is a diagram illustrating an example in which unicast communication is performed through a sidelink;
FIG. 5B is a diagram illustrating an example of a protocol of a sidelink terminal to which an embodiment of the disclosure is applied;
FIG. 5C is a diagram illustrating an example of groupcast communication in which one terminal transmits common data to multiple terminals through sidelinks;
FIG. 6 is a diagram illustrating an example in which multiple terminals having received common data through groupcasting feed back information indicating whether the data has been successfully received;
FIG. 7 is a diagram illustrating that synchronization and a physical broadcast channel of an NR system are mapped to a frequency and time domain;
FIG. 8 is a diagram illustrating symbols on which transmission of an SS/PBCH block is possible according to subcarrier spacing;
FIG. 9 is a diagram illustrating a processing time of a terminal according to a timing advance;
FIG. 10 is a diagram illustrating an example of transmitting data, receiving a HARQ-ACK feedback for the data, and performing retransmission according to the feedback;
FIG. 11 is a diagram illustrating an example of a communication system using a satellite;
FIG. 12 is a diagram illustrating an orbital period of a communication satellite around the Earth according to the altitude and height of the satellite;
FIG. 13 is a diagram illustrating an example in which a base station transmits data to a terminal, and the terminal transmits an ACK/NACK feedback for the data to the base station;
FIG. 14 is a flowchart illustrating a terminal operation in downlink data transmission or reception according to an embodiment of the disclosure;
FIG. 15 is a flowchart illustrating a base station operation in downlink data transmission or reception according to an embodiment of the disclosure;
FIG. 16 is a flowchart illustrating a terminal operation in uplink data transmission or reception according to an embodiment of the disclosure;
FIG. 17 is a flowchart illustrating a base station operation in uplink data transmission or reception according to an embodiment of the disclosure;
FIG. 18 is a block diagram showing an internal structure of a terminal according to an embodiment of the disclosure; and
FIG. 19 is a block diagram showing an internal structure of a base station according to an embodiment of the disclosure.

**[Mode for the Invention]**

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system defined by 3GPP is called a "new radio (NR) system". The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems. In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

New radio access technology (NR), which is a new 5G communication, is designed to allow various services to be freely multiplexed in time and frequency resources, and accordingly, waveform/numerology and reference signals may be dynamically or freely allocated according to the needs of a corresponding service. In order to provide an optimal service to a terminal in wireless communication, data transmission optimized through measurement for channel quality and interference amounts is important, and accurate measurement for channel state is necessary accordingly. However, unlike 4G communication in which channel and interference characteristics do not largely change with respect to frequency resources, in a case of 5G channels, channel and interference characteristics largely change depending on service. Therefore, support of subsets at the level of frequency resource groups (FRGs) allowing separate measurement is required. The types of services supported in an NR system may be divided into categories, such as enhanced mobile broadband (eMBB), massive machine type communications (mMTC), and ultra-reliable and low-latency communications (URLLC). It may be considered that eMBB is a service aiming for high-speed transmission of a large amount of data, mMTC is a service aiming for terminal power minimization and access by multiple terminals, and URLLC is a service aiming for high reliability and low latency. Different requirements may be applied according to the type of a service applied to a terminal.

As described above, multiple services may be provided in a communication system, and in order to provide multiple services to a user, a method for providing respective services to a user in the same time interval according to the features thereof, and a device using the same method are required.

Hereinafter, embodiments of the disclosure will be described in detail with reference to the accompanying drawings.

In describing the embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Further, the "unit" in the embodiments may include one or more processors.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services. Furthermore, communication standards for 5G or new radio (NR) as 5th wireless communication systems are under discussion.

As a typical example of the broadband wireless communication system, an NR system employs an orthogonal frequency division multiplexing (OFDM) scheme in a downlink (DL) and in an uplink (UL). More specifically, the NR system employs a cyclic-prefix OFDM (CP-OFDM) scheme in a downlink and employs two schemes, that is, discrete Fourier transform spreading OFDM (DFT-S-OFDM) scheme, in addition to the CP-OFDM scheme, in an uplink. The uplink indicates a radio link through which a user equipment (UE) {or a mobile station (MS)} transmits data or control signals to a base station (BS) (or gNode B), and the downlink indicates a radio link through which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

An NR system employs a hybrid automatic repeat request (HARQ) scheme of, when a decoding failure has occurred in an initial transmission, retransmitting corresponding data on a physical layer. The HARQ scheme means that if a receiver fails to correctly decode data, the receiver transmits information (negative acknowledgement (NACK)) notifying a decoding failure to a transmitter, so as to allow the transmitter to retransmit corresponding data on a physical layer. The receiver combines the data retransmitted by the transmitter with the data previously failed to be decoded, to improve data reception performance. Furthermore, if the receiver correctly decodes data, the receiver may transmit information (acknowledgement, ACK) notifying a decoding success to the transmitter, so as to allow the transmitter to transmit new data.

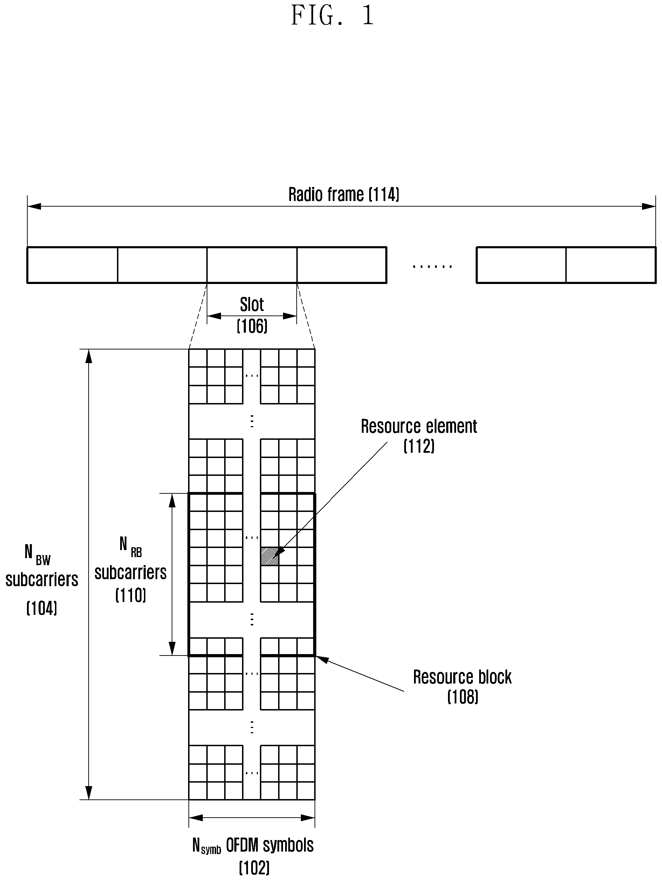

FIG. 1 is a diagram illustrating a basic structure of a time-frequency domain that is a wireless resource domain in which the data or a control channel is transmitted through a downlink or an uplink in an NR system.

In FIG. 1, the transverse axis indicates a time domain, and the longitudinal axis indicates a frequency domain. A minimum transmission unit in the time domain is an OFDM symbol, and $N_{symb}$ OFDM symbols 102 configure a single slot 106. The length of a subframe is defined as 1.0 ms, and the length of a radio frame 114 is defined as 10 ms. A minimum transmission unit in the frequency domain is a subcarrier, and the bandwidth of the entire system transmission band is configured by a total of $N_{BW}$ subcarriers 104.

In the time-frequency domain, a basic unit of resource is a resource element (RE) 112, which may be represented by an OFDM symbol index and a subcarrier index. A resource block (RB or physical resource block (PRB)) 108 is defined as $N_{symb}$ number 102 of consecutive OFDM symbols in the time domain, and $N_{RB}$ number 110 of consecutive subcarriers in the frequency domain. Therefore, the one RB 108 is configured by $N_{symb}$ x $N_{RB}$ number of REs 112. Generally, a minimum transmission unit of data is the RB unit. Generally in an NR system, $N_{symb}$ is equal to 14, $N_{RB}$ is equal to 12, and $N_{BW}$ is proportional to the bandwidth of a system transmission band. A data rate may be increased in proportion to the number of RBs scheduled to a terminal.

In an NR system, in a case of a FDD system operating an uplink and a downlink by distinguishing them according to frequency, a downlink transmission bandwidth and an uplink transmission bandwidth may be different from each other. A channel bandwidth indicates an RF bandwidth corresponding to a system transmission bandwidth. Table 1 and Table 2 show part of the correlations between a system transmission bandwidth, a subcarrier spacing, and a channel bandwidth defined in an NR system, in a frequency band lower than 6 GHz and a frequency band higher than 6 GHz, respectively. For example, a transmission bandwidth is configured by 273 RBs in an NR system having a 100 MHz channel bandwidth at a 30 KHz subcarrier spacing. N/A below may be a bandwidth-subcarrier combination not supported in an NR system.

[Table 1]

| Channel bandwidth $BW_{Channel}$ [MHz] | Subcarrier spacing | 5 MHz | 10 MHz | 20 MHz | 50 MHz | 80 MHz | 100 MHz |
|---|---|---|---|---|---|---|---|
| Transmission bandwidth configuration $N_{RB}$ | 15 kHz | 25 | 52 | 106 | 270 | N/A | N/A |
| | 30 kHz | 11 | 24 | 51 | 133 | 217 | 273 |
| | 60 kHz | N/A | 11 | 24 | 65 | 107 | 135 |

[Table 2]

| Channel bandwidth $BW_{Channel}$ [MHz] | Subcarrier spacing | 50 MHz | 100 MHz | 200 MHz | 400 MHz |
|---|---|---|---|---|---|
| Transmission bandwidth configuration $N_{RB}$ | 60 kHz | 66 | 132 | 264 | N/A |
| | 120 kHz | 32 | 66 | 132 | 264 |

A frequency range in an NR system may be defined to be divided into FR1 and FR2 as shown in Table 3 below.

[Table 3]

| Frequency range designation | Corresponding frequency range |
|---|---|
| FR1 | 450 MHz - 7125 MHz |
| FR2 | 24250 MHz - 52600 MHz |

It may be possible that the range of FR1 and FR2 may be changed and applied. For example, the frequency range of FR1 may be changed from 450 MHz to 6000 MHz and then be applied.

In an NR system, scheduling information on downlink data or uplink data is transferred from a base station to a terminal through downlink control information (DCI). DCI is defined according to various formats, and each of the formats may represent whether the DCI is scheduling information (a UL grant) on uplink data or scheduling information (a DL grant) on downlink data, whether the DCI is compact DCI including control information having a small size, whether spatial multiplexing using multiple antennas is applied, whether the DCI is DCI used for power control, etc. For example, DCI format 1_1, which is scheduling control information (a DL grant) on downlink data, may include at least one of the pieces of control information described below.

- Carrier indicator: This indicates a carrier on which data scheduled by DCI is transmitted - 0 or 3 bits
- Identifier for DCI formats: This indicate a DCI format, and specifically, indicates an indicator for distinguishing whether corresponding DCI is for downlink or uplink - [1] bits
- Bandwidth part indicator: This indicates a change in a bandwidth part when the change occurs - 0, 1, or 2 bits
- Frequency domain resource assignment: This is resource allocation information indicating a frequency domain resource allocation, and represents a different resource according to whether a resource allocation type is 0 or 1.

- Time domain resource assignment: This is resource allocation information indicating a time domain resource allocation, and may indicate higher layer signaling or a configuration of or one configuration of a predetermined PDSCH time domain resource allocation list - 1, 2, 3, or 4 bits
- VRB-to-PRB mapping: This indicates the mapping relation between a virtual resource block (VRB) and a physical resource block (PRB) - 0 or 1 bit
- PRB bundling size indicator: This indicates a physical resource block bundling size to which the same precoding is assumed to be applied - 0 or 1 bit
- Rate matching indicator: This indicates a rate matching group to be applied among rate matching groups configured via a higher layer applied to a PDSCH - 0, 1, or 2 bits
- ZP CSI-RS trigger: This triggers zero-power channel state information reference signal - 0, 1, or 2 bits
- Transport block (TB)-related configuration information: This indicates a modulation and coding scheme (MCS), a new data indicator (NDI), and a redundancy version (RV) for one or two TBs.
- Modulation and coding scheme (MCS): This indicates a modulation scheme and a coding rate which are used for data transmission. That is, this may indicates a coding rate value providing a TBS and channel coding information together with information indicating whether the modulation scheme is QPSK, 16QAM, 64QAM, or 256QAM.
- New data indicator: This indicates whether transmission is a HARQ initial transmission or retransmission.
- Redundancy version: This indicates a redundancy version of a HARQ.
- HARQ process number: This indicates a HARQ process number applied to a PDSCH - 4 bits
- Downlink assignment index: This is an index for generating a dynamic HARQ-ACK codebook when a HARQ-ACK for a PDSCH is reported.- 0 or 2 or 4 bits
- TPC command for scheduled PUCCH: Power control information applied to a PUCCH for reporting a HARQ-ACK for a PDSCH - 2 bits
- PUCCH resource indicator: Information indicating a resource of a PUCCH for reporting a HARQ-ACK for a PDSCH - 3 bits
- PDSCH-to-HARQ_feedback timing indicator: Configuration information relating to which slot on which a PUCCH for reporting a HARQ-ACK for a PDSCH is transmitted - 3 bits
- Antenna ports: Information indicating a DMRS CDM group on which a PDSCH is not transmitted, and an antenna port of a PDSCH DMRS - 4, 5, or 6 bits
- Transmission configuration indication: Information indicating beam-related information on a PDSCH - 0 or 3 bits
- SRS request: Information requesting an SRS transmission - 2 bits
- CBG transmission information: Information indicating a code block group (CBG) to which data transmitted through a PDSCH corresponds, when a code block group-based retransmission is configured - 0, 2, 4, 6, or 8 bits
- CBG flushing out information: Information indicating whether a code block group having been previously received by a terminal is available for HARQ combining - 0 or 1 bit
- DMRS sequence initialization: This indicates a DMRS sequence initialization parameter - 1 bit

In the above description, in a case of data transmission through a PDSCH or PUSCH, the time domain resource assignment may be transferred by information on a slot on which the PDSCH/PUSCH is transmitted, S indicating the position of a starting symbol in the slot, and L indicating the number of symbols to which the PDSCH/PUSCH is mapped. S may be a relative position from the start of the slot, L may be the number of consecutive symbols, and S and L may be determined from a start and length indicator value (SLIV) defined as in Equation 1 below.

[Equation 1]

if $(L-1)\leq 7$ then

$$SLIV=14\cdot(L-1)+S$$

else

$$SLIV=14\cdot(14-L+1)+(14-1-S)$$

where $0<14\leq 14-S$

In an NR system, a SLIV value, a PDSCH/PUSCH mapping type, and information on a slot on which a PDSCH/PUSCH is transmitted may be configured for a terminal in one row through RRC configuration (for example, the information may be configured in a type of table). Thereafter, in the time domain resource assignment of DCI, an index value in the configured table may be indicated whereby a base station transfers, to a terminal, a SLIV value, a PDSCH/PUSCH mapping type, and information on a slot on which a PDSCH/PUSCH is transmitted.

In an NR system, a PDSCH mapping type is defined to be type A and type B. In PDSCH mapping type A, the first symbol among DMRS symbols is positioned at the second or third OFDM symbol in a slot. In PDSCH mapping type B, the first symbol among DMRS symbols is positioned at the first OFDM symbol of a time domain resource assigned for PUSCH transmission.

The DCI may undergo a channel coding and modulation process, and then be transmitted on a physical downlink control channel (PDCCH) that is a downlink physical control channel. In the disclosure, control information being transmitted through a PDCCH or a PUCCH may be expressed as a PDCCH or a PUCCH being transmitted. Similarly, data being transmitted through a PUSCH or a PDSCH may be expressed as a PUSCH or a PDSCH being transmitted.

Generally, the DCI is scrambled by a particular radio network temporary identifier (RNTI) (or terminal identifier) independently for each terminal, and then a cyclic redundancy check (CRC) is added to the DCI. The DCI is channel-coded, and then is configured to be an independent PDCCH to be transmitted. The PDCCH is mapped and transmitted in a control resource set (CORESET)) configured for a terminal.

Downlink data may be transmitted on a physical downlink shared channel (PDSCH) that is a physical channel for downlink data transmission. A PDSCH may be transmitted after the control channel transmission interval, and scheduling information, such as a specific mapping position in the frequency domain, a modulation scheme, etc., is determined based on DCI transmitted through the PDCCH.

Through MCS in control information configuring the DCI, a base station notifies a terminal of a modulation scheme applied to a PDSCH to be transmitted, and the size (transport block size (TBS)) of data to be transmitted. In an embodiment, MCS may be configured by 5 bits or larger or smaller. The TBS corresponds to the size of data (a transport block (TB)), which a base station is to transmit, before channel coding for error correction is applied to the data.

In the disclosure, a transport block (TB) may include a medium access control (MAC) header, a MAC control element, one or more MAC service data units (SDUs), and padding bits. In addition, a TB may indicate the unit of data delivered from an MAC layer to a physical layer, or an MAC protocol data unit (PDU).

A modulation scheme supported by an NR system is quadrature phase shift keying (QPSK), 16 quadrature amplitude modulation (QAM), 64QAM, and 256QAM, and the modulation orders ($Q_m$) of them correspond to 2, 4, 6, and 8, respectively. That is, 2 bits per symbol may be transmitted in QPSK modulation, 4 bits per symbol may be transmitted in 16 QAM modulation, 6 bits per symbol may be transmitted in 64 QAM modulation, and 8 bits per symbol may be transmitted in 256 QAM modulation.

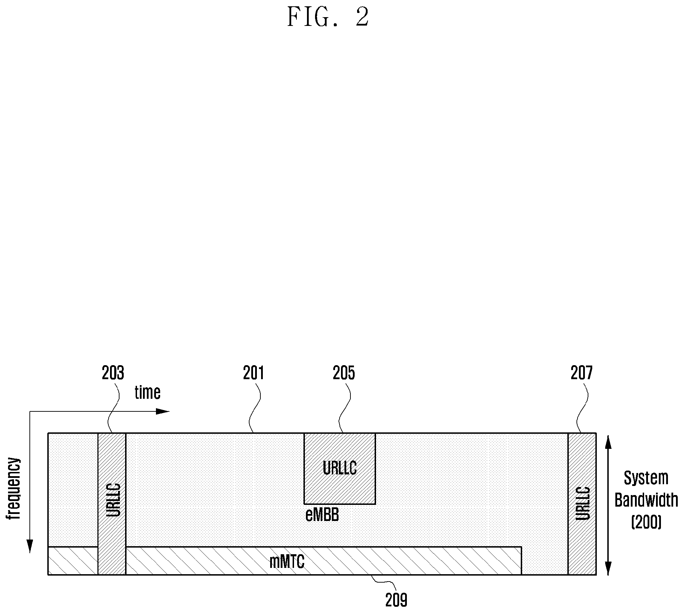

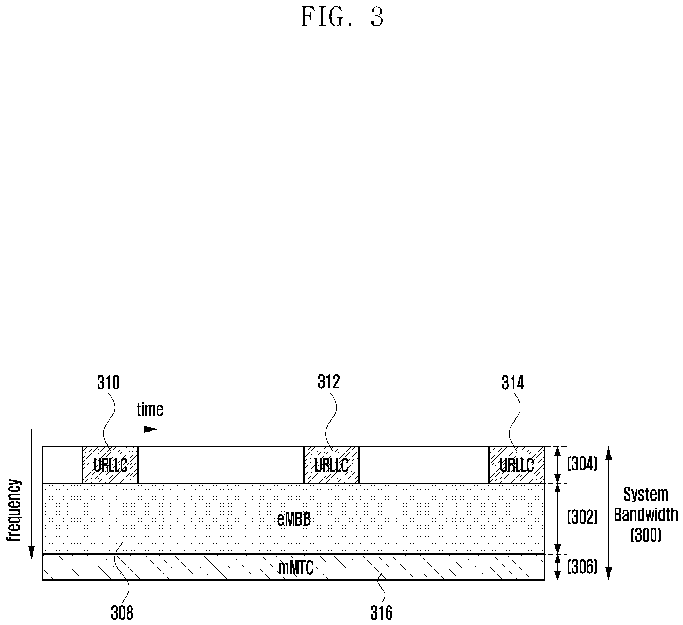

FIG. 2 and FIG. 3 are diagrams illustrating an example in which pieces of data of eMBB, URLLC, and mMTC that are services considered in a 5G or NR system are assigned in frequency-time resources.

Referring to FIG. 2 and FIG. 3, a scheme in which frequency and time resources are allocated for information transmission in each system may be identified.

FIG. 2 is a diagram illustrating an example in which eMBB, URLLC, and mMTC data are assigned to the entire system frequency band. First, in FIG. 2, data for eMBB, URLLC, and mMTC may be assigned in an entire system frequency band 200. If URLLC data 203, 205, and 207 occur and are required to be transmitted while eMBB 201 and mMTC 209 are assigned and transmitted in a particular frequency band, the URLLC data 203, 205, and 207 may be transmitted without emptying or transmitting a part to which the eMBB 201 and the mMTC 209 have already been assigned. URLLC among the services is required to reduce a latency time, and thus the URLLC data 203, 205, and 207 may be assigned to a part of the eMBB-assigned resource 201 and then be transmitted. It is obvious that, when URLLC is additionally assigned and transmitted in the resource to which eMBB is assigned, eMBB data may not be transmitted in an overlapped frequency-time resource, and thus transmission performance of the eMBB data may be degraded. That is, in the above case, an eMBB data transmission failure may occur due to URLLC assignment.

FIG. 3 is a diagram illustrating an example in which eMBB, URLLC, and mMTC data are assigned to divided system frequency bands. In FIG. 3, an entire system frequency band 300 is divided into subbands 302, 304, and 306 to be used for transmission of a service and data. Information related to a configuration of the subbands may be pre-determined, and this information may be transmitted from a base station to a terminal through higher layer signaling. Alternatively, a base station or a network node may randomly configure the subbands through partitioning, and may provide services without transmission of separate subband configuration information to a terminal. FIG. 3 illustrates the subband 302 used for eMBB data transmission, the subband 304 used for URLLC data transmission, and the subband 306 used for mMTC data transmission.

In order to describe a method and a device proposed in an embodiment, the terms "a physical channel" and "a signal" in an NR system may be used. However, the contents of the disclosure may be applied to a wireless communication system rather than an NR system.

Hereinafter, embodiments of the disclosure will be described in detail with reference to the accompanying drawings. In addition, in describing the disclosure, a detailed description of relevant functions or configurations incorporated herein will be omitted when it may make the subject matter of the disclosure rather unclear. The terms as described below are defined in consideration of the functions in the disclosure, and the meaning of the terms may vary according to the intention of a user or operator, convention, or the like. Therefore, the definitions of the terms should be made based on the contents throughout the specification.

Hereinafter, a sidelink (SL) indicates a signal transmission/reception path between terminals, and may be used together with a PC5 interface. Hereinafter, a base station is a subject performing resource allocation for a terminal, and may support both V2X communication and general cellular communication, or support only V2X communication. That is, a base station may indicate an NR base station (e.g., gNB), an LTE base station (e.g., eNB), or a road site unit (RSU) (or a fixed station). A terminal may include not only a general user equipment and a mobile station but also all of a vehicle supporting vehicle-to-vehicle (V2V) communication, a vehicle or a pedestrian's handset (e.g., smartphone) supporting vehicle-to-pedestrian (V2P) communication, a vehicle supporting vehicle-to-network (V2N) communication, or a vehicle supporting communication between a vehicle and a transportation infrastructure (vehicle-to-infrastructure (V2I) communication), and an RSU equipped with a terminal function, an RSU equipped with a base station function, or an RSU equipped with a part of a base station function and a part of a terminal function. In the disclosure, a downlink (DL) denotes a wireless transmission path of a signal transmitted by a base station to a terminal, and an uplink (UL) denotes a wireless transmission path of a signal transmitted by a terminal to a base station.

In the following description, an embodiment of the disclosure will be described with an NR system as an example, but an embodiment of the disclosure may also be applied to other communication systems having the similar technical backgrounds or channel form. In addition, an embodiment of the disclosure may be also applied to another communication system through partial modification without departing too far from the scope of the disclosure according to the determination of a person skilled in the art.

In the disclosure, the conventionally used terms "physical channel" and "signal" may be used together with data or a control signal. For example, a PDSCH is a physical channel through which data is transmitted, but may be called data in the disclosure.

Hereinafter, in the disclosure, higher signaling is a signal transfer method in which a signal is transferred to a terminal by a base station by using a physical layer downlink data channel, or is transferred to a base station by a terminal by using a physical layer uplink data channel. The higher signaling may be referred to as RRC signaling or a MAC control element (MAC CE).

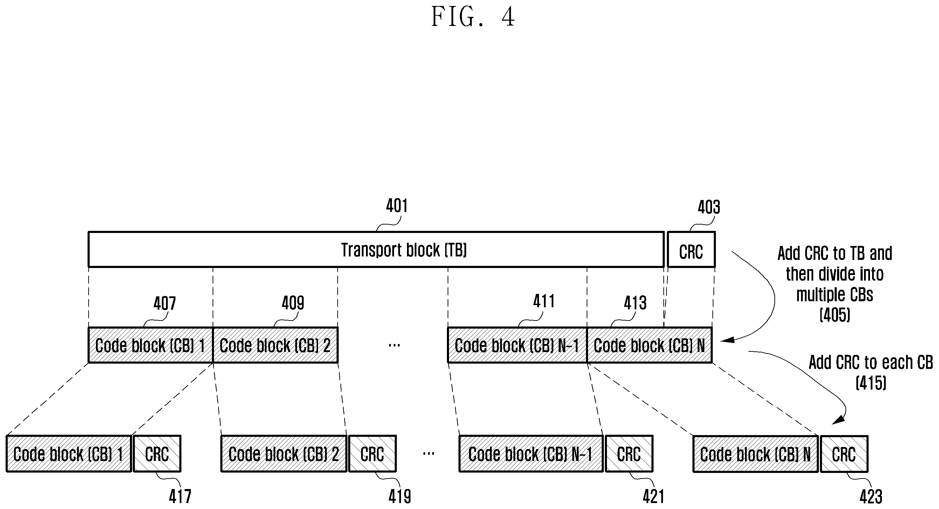

FIG. 4 is a diagram illustrating an example of a process in which one transport block is divided into several code blocks, and CRCs are added thereto.

Referring to FIG. 4, a CRC 403 may be added to the last or the foremost part of one transport block (TB) 401 to be transmitted in an uplink or downlink. The CRC 403 may have 16 bits, 24 bits, a pre-fixed number of bits, or the number of bits, which is variable according to a channel situation, and may be used for determination of whether channel coding is successful. A block in which the CRC 403 is added to the TB 401 may be partitioned into several code blocks (CBs) 407, 409, 411, and 413 (as indicated by reference numeral 405). The code blocks may be generated through partitioning to have a predetermined maximum size, and the last code block 413 may have a size smaller than those of the other code blocks 407, 409, and 411. However, this merely corresponds to an example, and according to another example, 0, a random value, or 1 may be inserted in the last code block 413 so that the last code block 413 has the same length as those of the other code blocks 407, 409, and 411.

In addition, CRCs 417, 419, 421, and 423 may be added to the code blocks 407, 409, 411, and 413, respectively (as indicated by reference numeral 415). Each of the CRCs may have 16 bits, 24 bits, or a pre-fixed number of bits, and may be used for determination of whether channel coding is successful.

In order to generate the CRC 403, the TB 401 and a cyclic generator polynomial may be used, and the cyclic generator polynomial may be defined by various methods. For example, when a cyclic generator polynomial for a 24-bit CRC is assumed to be $gCRC24A(D) = D^{24} + D^{23} + D^{18} + D^{17} + D^{14} + D^{11} + D^{10} + D^7 + D^6 + D^5 + D^4 + D^3 + D + 1$, and L is equal to 24 (L=24), CRC $p_0,p_1,p_2,p_3,...,p_{L-1}$ may determine $p_0,p_1,p_2,p_3,...p_{L-1}$ with respect to TB data $a_0,a_1,a_2,a_3,...,a_{A-1}$ as a value making a remainder 0 after dividing $a_0D^{A+23}+a_1D^{A+22}+...+a_{A-1}D^{24}+a_0D^{23}+p_1D^{22}+...+p_{22}D^1+p_{23}$ by gCRC24A(D). In the above example, a description has been given under the assumption that L, which is a CRC length, is equal to 24. However, L, which is a CRC length, may be determined to be various lengths, such as 12, 16, 24, 32, 40, 48, and 64.

Through the above process, after a CRC is added to a TB, the TB+CRC may be divided into N CBs 407, 409, 411, and 413. The CRCs 417, 419, 421, and 423 may be added to the divided CBs 407, 409, 411, and 413, respectively (as indicated by reference numeral 415). A CRC added to a CB may be have a length different from that of a CRC added to a TB, and a different cyclic generator polynomial may be used for generation of the CRC. In addition, the CRC 403 added to the TB and the CRCs 417, 419, 421, and 423 added to the code blocks may be omitted according to the type of a channel code applied to the code blocks. For example, when an LDPC code rather than a turbo code is applied to a code block, the CRCs 417, 419, 421, and 423 to be inserted to respective code blocks may be omitted.

However, even when an LDPC is applied, the CRCs 417, 419, 421, and 423 may be added to code blocks without change. In addition, even when a polar code is used, a CRC may be added or omitted.

As described above with reference to FIG. 4, for a TB to be transmitted, a maximum length of one code block may be determined according to the type of applied channel coding, and the TB and a CRC added to the TB may be partitioned into code blocks according to the maximum length of the code block.

In a conventional LTE system, a CRC for a CB is added to a divided CB, a data bit of the CB and the CRC are encoded by a channel code, thus coded bits are determined, and the number of rate-matched bits is determined for the coded bits as promised.

In an NR system, a TB size (TBS) may be calculated through the following stages.

Stage 1: $N'_{RE}$ that is the number of REs allocated to PDSCH mapping in one PRB within allocated resources is calculated.

$N'_{RE}$ may be calculated by $N_{sc}^{RB} \cdot N_{symb}^{sh} - N_{DMRS}^{PRB} - N_{oh}^{PRB}$. $N_{sc}^{RB}$ is 12, and $N_{symb}^{sh}$ may indicate the number of OFDM symbols allocated to a PDSCH. $N_{DMRS}^{PRB}$ is the number of REs in one PRB, which are occupied by a DMRS of the same CDM group. $N_{oh}^{PRB}$ is the number of REs occupied by an overhead in one PRB, which is configured through higher signaling, and may be configured to be one of 0, 6, 12, and 18. Thereafter, $N_{RE}$ that is the number of total REs allocated to a PDSCH may be calculated. $N_{RE}$ is calculated by $\min(156, N'_{RE}) \cdot n_{PRB}$, and $n_{PRB}$ indicates the number of PRBs allocated to a terminal.

Stage 2: $N_{info}$ that is the number of arbitrary information bits may be calculated by $N_{RE} \cdot R \cdot Q_m \cdot v$. R is a code rate, $Q_m$ is a modulation order, and information of the value may be transferred using a promised table and an MCS bit field of DCI. In addition, v is the number of allocated layers. If $N_{info} \leq 3824$, a TBS may be calculated through stage 3 below. In the other cases, a TBS may be calculated through stage 4.

Stage 3: $N'_{info}$ may be calculated through the equations of $N'_{info} = \max(24, 2^n \cdot \lfloor \frac{N_{info}}{2^n} \rfloor)$ and $n = \max(3, \lfloor \log_2(N_{info}) \rfloor - 6)$. A TBS may be determined to be a value closest to $N'_{info}$ among values not smaller than $N'_{info}$ in Table 4 below.

【Table 4】

| Index | TBS | Index | TBS | Index | TBS | Index | TBS |
|---|---|---|---|---|---|---|---|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

Stage 4: $N'_{info}$ may be calculated through the equations of $N'_{info} = \max(3840, 2^n \times round(\frac{N_{info}-24}{2^n}))$ and $n = \lfloor \log_2(N_{info}-24) \rfloor - 5$. A TBS may be determined through an $N'_{info}$ value and [pseudo-code 1] below. C below corresponds to the number of code blocks included in one TB.

[Start of pseudo-code 1]

if $R \leq 1/4$

$$TBS = 8 * C * \left\lceil \frac{N'_{info} + 24}{8 * C} \right\rceil - 24, \text{ where } C = \left\lceil \frac{N'_{info} + 24}{3816} \right\rceil$$

else

if $N'_{info} > 8424$

$$TBS = 8 * C * \left\lceil \frac{N'_{info} + 24}{8 * C} \right\rceil - 24, \text{ where } C = \left\lceil \frac{N'_{info} + 24}{8424} \right\rceil$$

else

$$TBS = 8 * \left\lceil \frac{N'_{info} + 24}{8} \right\rceil - 24$$

end if

end if

[End of pseudo-code 1]

In an NR system, when one CB is input to an LDPC encoder, the CB may be output with parity bits added thereto. The amount of the parity bits may be changed according to an LDCP base graph. A method for sensing all parity bits generated by LDPC coding in response to a particular input may be referred to as full buffer rate matching (FBRM), and a method for limiting the number of transmittable parity bits may be called limited buffer rate matching (LBRM). When a resource is allocated for data transmission, a circular buffer is made of an LDPC encoder output, and bits of the made buffer are repeatedly transmitted at times corresponding to the allocated resource, and the length of the circular buffer may be called $N_{cb}$.

When the number of all parity bits generated by LDPC coding is N, in the FBRM method, $N_{cb}$ is equal to N ($N_{cb}$=N). In the LBRM method, $N_{cb}$ is equal to min(N, $N_{ref}$), $N_{ref}$ is given by $\left\lfloor \frac{TBS_{LBRM}}{C \cdot R_{LBRM}} \right\rfloor$, and $R_{LBRM}$ may be determined to be 2/3. In the above method for obtaining a TBS, $TBS_{RBRM}$ is calculated using a maximum number of layers supported by a terminal in a corresponding cell, and under the assumption that a maximum modulation order $Q_m$ is 8 when use of an MCS table supporting 256QAM is configured for at least one BWP in the corresponding cell, and is 6 (64QAM) when the same is not configured, a code rate is 948/1024 which is the maximum code rate, $N_{RE}$ is 156 · $n_{PRB}$, and $n_{PRB}$ is $n_{PRB,LBRM}$. $n_{PRB,LBRM}$ may be given as in Table 5 below.

【Table 5】

| Maximum number of PRBs across all configured BWPs of a carrier | $n_{PRB,LBRM}$ |
|---|---|
| Less than 33 | 32 |
| 33 to 66 | 66 |
| 67 to 107 | 107 |
| 108 to 135 | 135 |
| 136 to 162 | 162 |
| 163 to 217 | 217 |
| Larger than 217 | 273 |

In an NR system, a maximum data rate supported by a terminal may be determined by Equation 2 below.

[Equation 2]

$$\text{data rate (in Mbps)} = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right)$$

In Equation 2, J may indicate the number of carriers grouped through carrier aggregation, $R_{max}$ may be 948/1024, $v_{Layers}^{(j)}$ may be a maximum number of layers, $Q_m^{(j)}$ may be a maximum modulation order, $f^{(j)}$ may be a scaling index, and μ may mean a subcarrier spacing. One of 1, 0.8, 0.75, and 0.4 as $f^{(j)}$ may be reported by a terminal, and μ may be given as in Table 6 below.

[Table 6]

| μ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

In addition, $T_s^{\mu}$ is an average OFDM symbol length, $T_s^{\mu}$ may be calculated by $\frac{10^{-3}}{14 \cdot 2^{\mu}}$, and $N_{PRB}^{BW(j),\mu}$ is a maximum number of RBs at BW(j). $OH^{(j)}$ is an overhead value, and may be given as 0.14 in a downlink of FR1 (a 6 GHz band or lower), 0.18 in an uplink of FR1, 0.08 in a downlink of FR2 (a band above 6 GHz), and 0.10 in an uplink of FR2. A maximum data rate in a downlink in a cell having a frequency bandwidth of 100 MHz at a subcarrier spacing of 30 kHz may be calculated through Equation 2 as in Table 7.

[Table 7]

| $f^{(j)}$ | $v^{(j)}_{Layers}$ | $Q^{(j)}_m$ | Rmax | $N_{PRB}^{BW(j),\mu}$ | $T_s^\mu$ | $OH^{(j)}$ | data rate |
|---|---|---|---|---|---|---|---|
| 1 | 4 | 8 | 0.92578125 | 273 | 3.57143E-05 | 0.14 | 2337.0 |
| 0.8 | 4 | 8 | 0.92578125 | 273 | 3.57143E-05 | 0.14 | 1869.6 |
| 0.75 | 4 | 8 | 0.92578125 | 273 | 3.57143E-05 | 0.14 | 1752.8 |
| 0.4 | 4 | 8 | 0.92578125 | 273 | 3.57143E-05 | 0.14 | 934.8 |

Meanwhile, an actual data rate of a terminal, which may be measured in an actual data transmission, may be a value obtained by dividing the amount of data by a data transmission time. The actual data rate may be calculated by dividing a TBS by a TTI length in a 1 TB transmission, and may be calculated by dividing the sum of TBSs by a TTI length in a 2-TB transmission. For example, as the assumption used for obtaining Table 7, a maximum actual data rate in a downlink in a cell having a frequency bandwidth of 100 MHz at a subcarrier spacing of 30 kHz may be determined as in Table 8 below according to the number of allocated PDSCH symbols.

【Table 8】

| $N_{symb}^{sh}$ | $N_{DMRS}^{PRB}$ | $N_{RE}^{'}$ | $N_{RE}$ | $N_{info}$ | n | $N_{info}^{'}$ | C | TBS | TTI length (ms) | data rate (Mbps) |
|---|---|---|---|---|---|---|---|---|---|---|
| 3 | 8 | 28 | 7644 | 226453.5 | 12 | 225,280 | 27 | 225,480 | 0.107143 | 2,104.48 |
| 4 | 8 | 40 | 10920 | 323505.0 | 13 | 319,488 | 38 | 319,784 | 0.142857 | 2,238.49 |
| 5 | 8 | 52 | 14196 | 420556.5 | 13 | 417,792 | 50 | 417,976 | 0.178571 | 2,340.67 |
| 6 | 8 | 64 | 17472 | 517608.0 | 13 | 516,096 | 62 | 516,312 | 0.214286 | 2,409.46 |
| 7 | 8 | 76 | 20748 | 614659.5 | 14 | 622,592 | 74 | 622,760 | 0.250000 | 2,491.04 |
| 8 | 8 | 88 | 24024 | 711711.0 | 14 | 704,512 | 84 | 704,904 | 0.285714 | 2,467.16 |
| 9 | 8 | 100 | 27300 | 808762.5 | 14 | 802,816 | 96 | 803,304 | 0.321429 | 2,499.17 |
| 10 | 8 | 112 | 30576 | 905814.0 | 14 | 901,120 | 107 | 901,344 | 0.357143 | 2,523.76 |
| 11 | 8 | 124 | 33852 | 1002865.5 | 14 | 999,424 | 119 | 999,576 | 0.392857 | 2,544.38 |
| 12 | 8 | 136 | 37128 | 1099917.0 | 15 | 1,114,112 | 133 | 1,115,048 | 0.428571 | 2,601.78 |
| 13 | 8 | 148 | 40404 | 1196968.5 | 15 | 1,212,416 | 144 | 1,213,032 | 0.464286 | 2,612.68 |
| 14 | 8 | 160 | 43680 | 1294020.0 | 15 | 1,277,952 | 152 | 1,277,992 | 0.500000 | 2,555.98 |

A maximum data rate supported by a terminal may be identified through Table 7, and an actual data rate following an assigned TBS may be identified through Table 8. A maximum data rate may be greater than an actual data rate according to scheduling information.

In a wireless communication system, particularly in a new radio (NR) system, a data rate that a terminal is able to support may be promised between a base station and the terminal. The data rate may be calculated using a maximum frequency band, a maximum modulation order, and a maximum number of layers supported by the terminal. However, a calculated data rate may be different from a value calculated from the size (transport block size (TBS)) of a transport block (TB) used in an actual data transmission and the length of a transmission time interval (TTI).

Therefore, a terminal may be assigned a TBS greater than a value corresponding to a data rate supported by the terminal, and in order to prevent the assignment, a schedulable TBS may be limited according to a data rate supported by a terminal.

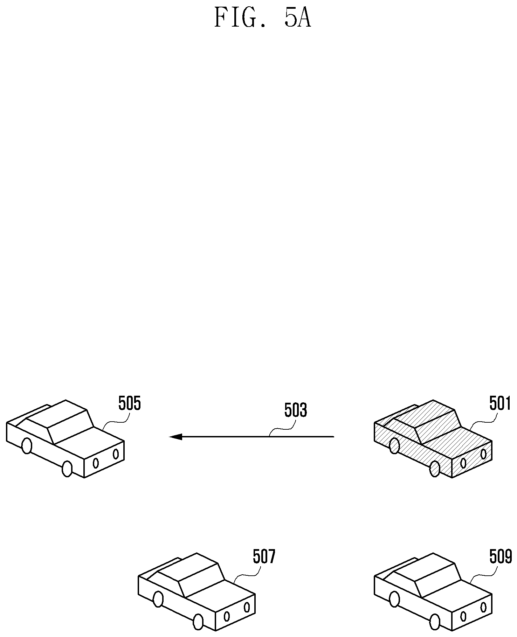

FIG. 5A is a diagram illustrating an example in which unicast communication is performed through a sidelink.

FIG. 5A illustrates an example in which a signal is transmitted from a first terminal 501 to a second terminal 505, and the direction of signal transmission may be opposite. That is, a signal may be transmitted from the second terminal 505 to the first terminal 501. Other terminals 507 and 509 rather than the first terminal 501 and the second terminal 505 are not able to receive a signal exchanged through a unicast (i.e., one-to-one communication) between the first terminal 501 and the second terminal 505. Signal exchange between the first terminal 501 and the second terminal 505 through a unicast may be performed through a process of unicast signal mapping in a resource promised between the first terminal 501 and the second terminal 505, signal scrambling using a value promised therebetween, control information mapping, data transmission using a value configured therebetween, and mutual identification of unique ID values. The terminal may be a moving terminal such as a vehicle. Separate control information, a physical control channel, and data may be transmitted for the unicast.

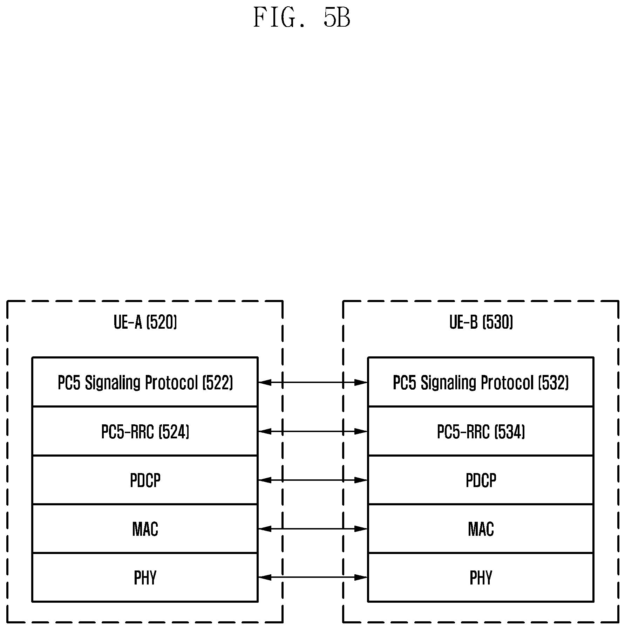

FIG. 5B is a diagram illustrating an example of a protocol of a sidelink terminal to which an embodiment of the disclosure is applied.

Although not illustrated in FIG. 5B, application layers of terminal-A 520 and terminal-B 530 may perform service search (discovery). The service search may include a search for a sidelink communication (unicast, groupcast, or broadcast) each terminal is to perform. Therefore, in FIG. 5B, terminal-A 520 and terminal-B 530 may be assumed to recognize to perform a unicast communication scheme through a service search process performed on the application layers. Sidelink terminals may obtain, through the service search process mentioned above, information on a transmitter ID (source identifier) and a destination ID (destination identifier) for a sidelink communication.

When the service search process is completed, PC-5 signaling protocol layers 522 and 532 illustrated in FIG. 5B may perform a terminal-to-terminal direct connection configuration (direct link connection setup) procedure. Pieces of security configuration information for a terminal-to-terminal direct communication may be exchanged. When the terminal-to-terminal direct connection configuration (direct link connection setup) is completed, PC-5 RRC layers 524 and 534 may perform a terminal-to-terminal PC-5 radio resource control (RRC) configuration procedure. Information on the capability of terminal-A and terminal-B may be exchanged, and pieces of access stratum (AS) layer parameter information for a unicast communication may be exchanged.

When the PC-5 RRC configuration procedure is completed, terminal-A 520 and terminal-B 530 may perform a unicast communication.

The above example has been described using a unicast communication as an example, but a groupcast communication may be also extendedly used. For example, when terminal-A 520, terminal-B 530, terminal-C not illustrated in FIG. 5B performs a groupcast communication, terminal-A 520 and terminal-B 530 may perform a service search, a terminal-to-terminal direct connection configuration (direct link setup), and a PC-5 RRC configuration procedure for a unicast communication, as mentioned above. Moreover, terminal-A 520 and terminal-C may also perform a service search, a terminal-to-terminal direct connection configuration (direct link setup), and a PC-5 RRC configuration procedure for a unicast communication. Lastly, terminal-B 530 and terminal-C may also perform a service search, a terminal-to-terminal direct connection configuration (direct link setup), and a PC-5 RRC configuration procedure for a unicast communication. That is, rather than performing a separate PC-5 RRC configuration procedure for a groupcast communication, a PC-5 RRC configuration procedure for a unicast communication may be performed by each pair of a transmission terminal and a reception terminal participating in a groupcast communication.

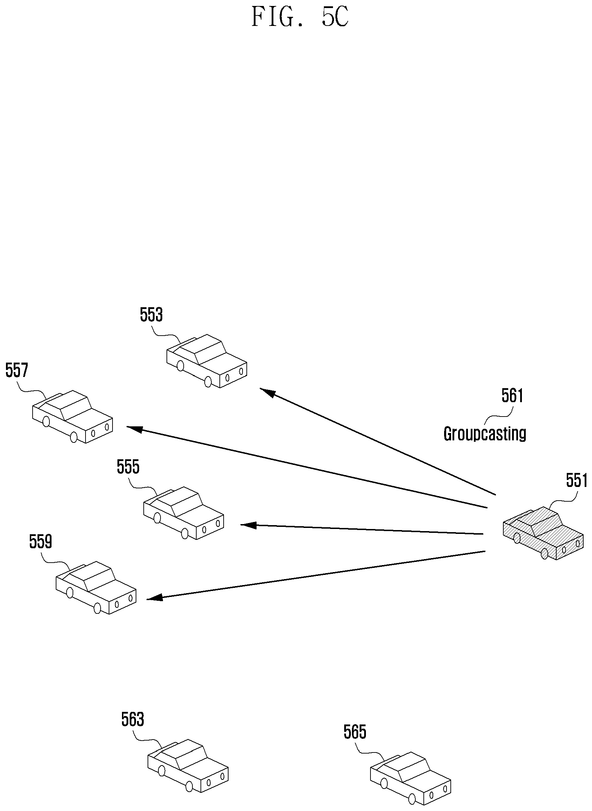

FIG. 5C is a diagram illustrating an example of groupcast communication in which one terminal transmits common data to multiple terminals through sidelinks.

FIG. 5C illustrates an example of communication of a groupcast 561 in which one terminal 511 transmits common data to multiple terminals 553, 555, 557, and 559 through sidelinks, and the first terminal 551 may transmit signals to the other terminals 553, 555, 557, and 559 in this group, and other terminals 563 and 565 not included in the group may be unable to receive signals transmitted for the groupcast.

The terminal transmitting signals for the groupcast may be another terminal in the group, resource allocation for signal transmission may be provided by a base station, may be provided by a terminal serving as a leader in the group, or may be autonomously selected by the terminal transmitting signals. The terminal may be a moving terminal such as a vehicle. Separate control information, a physical control channel, and data may be transmitted for the groupcast.

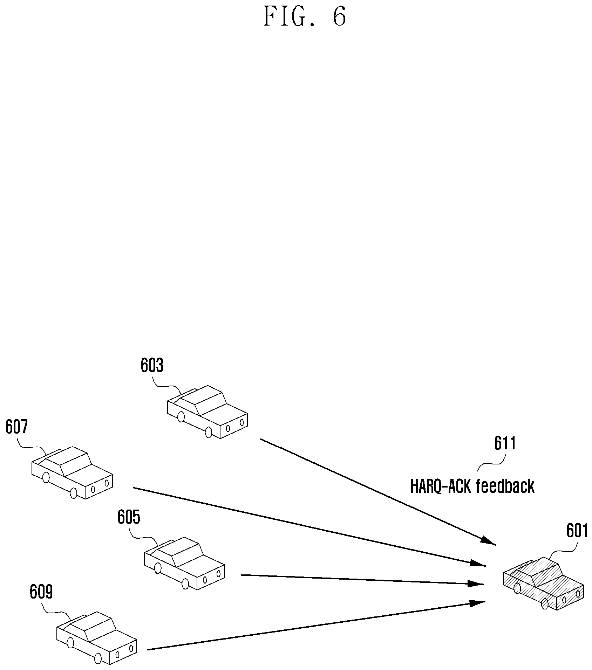

FIG. 6 is a diagram illustrating an example in which multiple terminals having received common data through groupcasting feed back information indicating whether the data has been successfully received. FIG. 6 illustrates an example in which terminals 603, 605, 607, and 609 having received common data through groupcasting transmit information related to a data reception success or failure to a terminal 601 having transmitted the data. The information may be the same as a HARQ-ACK feedback (as indicated by reference numeral 611). In addition, the terminals may have an LTE-based sidelink or NR-based sidelink function. A terminal having only an LTE-based sidelink function may not be able to transmit or receive an NR-based sidelink signal and physical channel. In the disclosure, a sidelink may be used together with PC5, V2X, or D2D. In FIG. 5C and FIG. 6, an example of transmission or reception according to groupcasting has been explained, but this example may also be applied to a unicast signal transmission or reception between terminals.

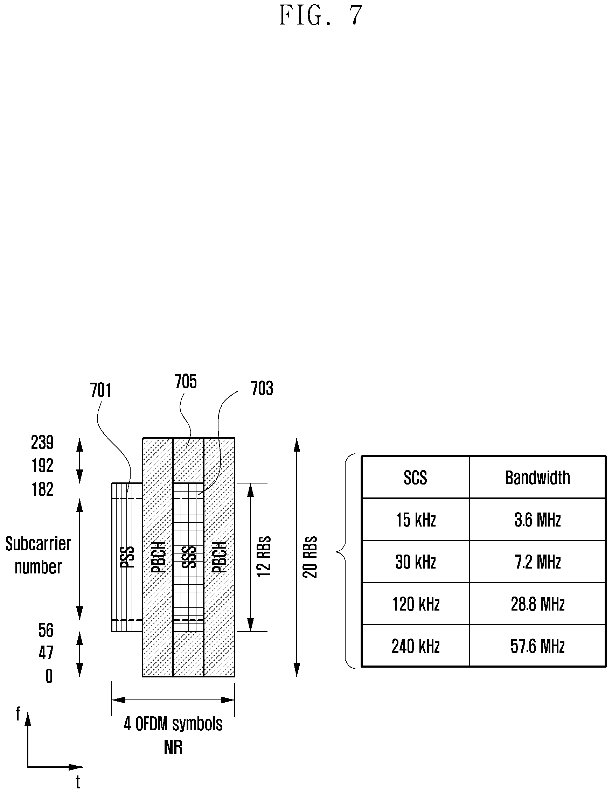

FIG. 7 is a diagram illustrating that a· synchronization signal and a physical broadcast channel (PBCH) of an NR system are mapped to a frequency and time domain.

A primary synchronization signal (PSS) 701, a subsidiary (secondary) synchronization signal (SSS), 703, and a PBCH are mapped over 4 OFDM symbols, and the PSS and the SSS are mapped to 12 RBs, and the PBCH are mapped to 20 RBs. A table in FIG. 7 shows how the frequency band of 20 RBs changes according to a subcarrier spacing (SCS). A resource region on which the PSS, SSS, and PBCH are transmitted may be called an SS/PBCH block. In addition, the SS/PBCH block may be referred to as an SSB block.

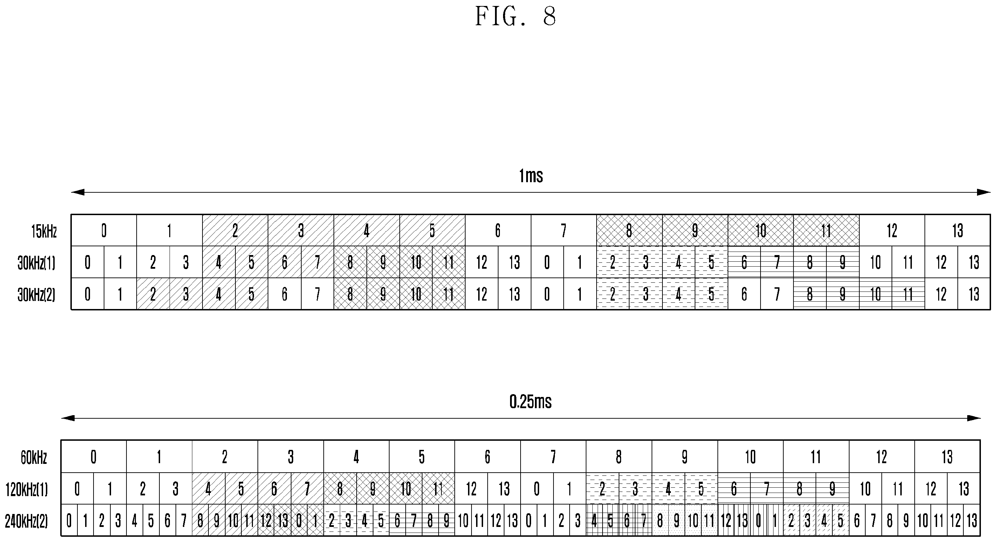

FIG. 8 is a diagram illustrating symbols on which transmission of an SS/PBCH block is possible according to subcarrier spacing.

Referring to FIG. 8, a subcarrier spacing may be configured to 15 kHz, 30 kHz, 120 kHz, and 240 kHz, and the position of a symbol on which an SS/PBCH block (or SSB block) may be positioned may be determined according to each subcarrier spacing. FIG. 8 illustrates the position of a symbol on which an SSB may be transmitted, according to a subcarrier spacing in symbols within 1 ms, and it is not necessary for an SSB to be always transmitted on the region marked in FIG. 8. The position on which the SSB block is transmitted may be configured for a terminal through system information or dedicated signaling.

Since a terminal is generally located away from a base station, a signal transmitted from the terminal is received by the base station after a propagation delay time (propagation delay). The propagation delay time is a value obtained by dividing, by the speed of light, a path on which a radio wave is transferred from a terminal to a base station, and may be generally a value obtained by dividing a distance from a terminal to a base station by the speed of light. In an embodiment, when a terminal is located 100 km apart from a base station, a signal transmitted by the terminal is received by the base station after about 0.34 msec. On the contrary, a signal transmitted by a base station is also received by a terminal after about 0.34 msec. As described above, according to the distance between a terminal and a base station, a time at which a signal transmitted by a terminal arrives at a base station may be changed. Therefore, when several terminals existing at different positions simultaneously transmit signals, times of arrival at a base station may be all different. In order to solve this problem to allow signals transmitted from several terminals to arrive at a base station at the same time, the terminals may transmit uplink signals at different times according to the positions thereof. This may be called timing advance in a 5G, NR, and LTE system.

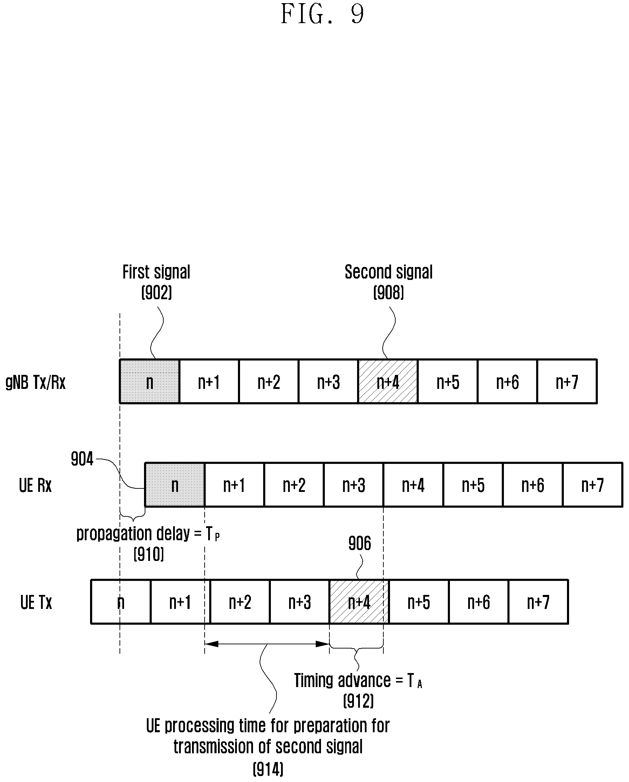

FIG. 9 is a diagram illustrating a processing time of a terminal according to a timing advance when the terminal receives a first signal and transmits a second signal corresponding thereto in a 5G or NR system according to a disclosed embodiment.

Hereinafter, a processing time of a terminal according to a timing advance will be described in detail. When a base station transmits an uplink scheduling grant (UL grant) or a downlink control signal and data (DL grant and DL data) to a terminal in slot n 902, the terminal may receive the uplink scheduling grant or the downlink control signal and data in slot n 904. The terminal may receive a signal later than a time at which the base station has transmitted the signal, by a propagation delay time ($T_p$) 910. In this embodiment, when the terminal receives a first signal in slot n 904, the terminal transmits a corresponding second signal in slot n+4 906. In order that a signal arrives at the base station at a particular time even when the terminal transmits the signal to the base station, the terminal may transmit a HARQ ACK/NACK for uplink data or downlink data at a timing 906 earlier than slot n+4 based on a signal received by the terminal, by a timing advance (TA) 912. Therefore, in this embodiment, a time for which the terminal prepares to transmit uplink data after receiving an uplink scheduling grant, or prepares to transfer a HARQ ACK or NACK after receiving downlink data may be a time obtained by excluding the TA from a time corresponding to three slots (as indicated by reference numeral 914).

For the timing determination, the base station may calculate the absolute value of a TA of the terminal. The base station may calculate the absolute value of a TA by adding or subtracting, to or from a TA value very first transferred to the terminal in a random access stage at an initial access by the terminal, a change amount of a TA value transferred through higher signaling thereafter. In the disclosure, the absolute value of a TA may be obtained by subtracting a starting time of an n-th TTI for reception of the terminal from a starting time of an n-th TTI for transmission of the terminal.

One of importance criteria for the performance of a cellular wireless communication system is a packet data latency time (latency). For the same, in an LTE system, a signal is transmitted or received in the unit of subframes each having a transmission time interval (hereinafter, TTI) of 1 ms. An LTE system operating as described above may support a terminal (short-TTI UE) having a transmission time interval shorter than 1 ms. In a 5G or NR system, a transmission time interval may be shorter than 1 ms. A short-TTI terminal is suitable for a voice over LTE (VoLTE) service or a service such as remote control, in which a latency time (latency) matters. In addition, a short-TTI terminal is a means enabling implementation of a mission-critical Internet of things (IoT), based on a cellular scheme.

In a 5G or NR system, when a base station transmits a PDSCH including downlink data, DCI scheduling the PDSCH indicates a $K_1$ value corresponding to information on a timing at which the terminal transmits HARQ-ACK information for the PDSCH. HARQ-ACK information includes a timing advance, and thus is not indicated to be transmitted earlier than symbol L1, a terminal may transmit the information to a base station. That is, HARQ-ACK information may include a timing advance and thus may be transmitted from a terminal to a base station at a time point equal to or after symbol L1. When HARQ-ACK information includes a timing advance and is thus indicated to be transmitted earlier than symbol L1, the HARQ-ACK information may not be valid HARQ-ACK information in a HARQ-ACK transmission from a terminal to a base station.

Symbol L1 may be the first symbol on which a cyclic prefix (CP) starts after $T_{proc,1}$ from the last time point of a PDSCH. $T_{proc,1}$ may be calculated as in Equation 3 below.

[Equation 3]

$$T_{proc,1}=((N_1+d_{1,1}+d_{1,2})(2048+144)\cdot\kappa 2^{-\mu})\cdot T_C$$

In Equation 3 mentioned above, $N_1$, $d_{1,1}$, $d_{1,2}$, κ, μ, and TC may be defined as follows.

- When HARQ-ACK information is transmitted through a PUCCH (uplink control channel), $d_{1,1}$ is equal to 0 ($d_{1,1}$=0), and the same is transmitted through a PUSCH (uplink shared channel, or data channel), $d_{1,1}$ is equal to 1 ($d_{1,1}$=1).
- When multiple activated component carriers or carriers are configured for a terminal, a maximum timing difference between the carriers may be reflected in a second signal transmission.
- In a case of PDSCH mapping type A, that is, in a case where the position of the first DMRS symbol is on the third or fourth symbol of a slot, when a position index i of the last symbol of a PDSCH is smaller than 7, $d_{1,2}$ is defined as 7-i ($d_{1,2}$=7-i).
- In a case of PDSCH mapping type B, that is, in a case where the position of the first DMRS symbol is the first symbol of a PDSCH, when the length of the PDSCH is four symbols, $d_{1,2}$ is equal to 3 ($d_{1,2}$=3), and when the length of the PDSCH is two symbols, $d_{1,2}$ is equal to 3+d ($d_{1,2}$=3+d), wherein d is the number of symbols on which the PDSCH overlaps with a PDCCH including a control signal scheduling the PDSCH.
- $N_1$ is defined according to μ as shown in Table 9 below. μ equal to 0, 1, 2, and 3 (μ=0, 1, 2, 3) indicate a subcarrier spacing of 15 kHz, 30 kHz, 60 kHz, and 120 kHz, respectively.

[Table 9]

| $\mu$ | PDSCH decoding time $N_1$ [symbols] | |
|---|---|---|
| | No additional PDSCH DM-RS configured | Additional PDSCH DM-RS configured |
| 0 | 8 | 13 |
| 1 | 10 | 13 |
| 2 | 17 | 20 |
| 3 | 20 | 24 |

an $N_1$ value provided in Table 9 described above may vary according to UE capability.

$T_c=1/(\Delta f_{max}\cdot N_f)$, $\Delta f_{max}=480\cdot 10^3 Hz$, $N_f=4096$, $\kappa=T_s/T_c=64$, $T_s=1/(\Delta f_{ref}\cdot N_{f,ref})$, $\Delta f_{ref}=15\cdot 10^3 Hz$, and $N_{f,ref}=2048$ are defined.

In addition, in a 5G or NR system, when a base station transmits control information including an uplink scheduling grant, a $K_2$ value corresponding to information on a timing at which a terminal transmits uplink data or a PUSCH may be indicated.

A PUSCH includes a timing advance, and thus is not indicated to be transmitted earlier than symbol L2, a terminal may transmit the PUSCH to a base station. That is, a PUSCH may include a timing advance and thus may be transmitted from a terminal to a base station at a time point equal to or after symbol L2. When a PUSCH includes a timing advance, and thus is indicated to be transmitted earlier than symbol L2, a terminal may neglect uplink scheduling grant control information from a base station.

Symbol L2 may be the first symbol of start of a CP of a PUSCH symbol required to be transmitted after $T_{proc,2}$ from the last time point of a PDCCH including a scheduling grant. $T_{proc,2}$ may be calculated as in Equation 4 below.

[Equation 4]

$$T_{proc,2}=((N_2+d_{2,1})(2048+144)\cdot\kappa 2^{-\mu})\cdot T_C$$

In Equation 4 mentioned above, $N_2$, $d_{2,1}$, κ, μ, and $T_C$ may be defined as follows.

- When the first symbol among PUSCH-assigned symbols includes only a DMRS, $d_{2,1}$= is equal to 0 ($d_{2,1}$=0), and in the other cases, $d_{2,1}$= is equal to 1 ($d_{2,1}$=1).
- When multiple activated component carriers or carriers are configured for a terminal, a maximum timing difference between the carriers may be reflected in a second signal transmission.

- $N_2$ is defined according to $\mu$ as shown in Table 10 below. $\mu$ equal to 0, 1, 2, and 3 ($\mu$=0, 1, 2, 3) indicate a subcarrier spacing of 15 kHz, 30 kHz, 60 kHz, and 120 kHz, respectively.

[Table 10]

| $\mu$ | PUSCH preparation time $N_2$ [symbols] |
|---|---|
| 0 | 10 |
| 1 | 12 |
| 2 | 23 |
| 3 | 36 |

An $N_2$ value provided in Table 10 described above may vary according to UE capability.

$T_c=1/(\Delta f_{max} \cdot N_f)$, $\Delta f_{max}=480 \cdot 10^3 Hz$, $N_f=4096$, $\kappa=T_s/T_c=64$, $T_s=1/(\Delta f_{ref} \cdot N_{f,ref})$, $\Delta f_{ref}=15 \cdot 10^3 Hz$, and $N_{f,ref}=2048$ are defined.

A 5G or NR system may configure a frequency band part (bandwidth part, hereinafter BWP) in one carrier so as to designate a terminal to perform transmission or reception within the configured BWP. This may be performed to reduce power consumption of the terminal. A base station may configure multiple BWPs, and may change an activated BWP in control information. A time usable by a terminal for BWP change may be defined as shown in Table 11 below.

[Table 11]

| Frequency Range | Scenario | Type 1 Delay (us) | Type 2 Delay (us) |
|---|---|---|---|
| 1 | 1 | 600 | 2000 |
| | 2 | 600 | 2000 |
| | 3 | 600 | 2000 |
| | 4 | 400 | 950 |
| 2 | 1 | 600 | 2000 |
| | 2 | 600 | 2000 |
| | 3 | 600 | 2000 |
| | 4 | 400 | 950 |

In Table 11, frequency range 1 indicates a frequency band of 6 GHz or lower, and frequency range 2 indicates a frequency band of 6 GHz or higher. In the above embodiment, type 1 and type 2 may be determined according to UE capability. In the above embodiment, scenarios 1, 2, 3, and 4 may be given as in Table 12 below.

【Table 12】

| | Change of Center Frequency | Non-change of Center Frequency |
|---|---|---|
| Change of Frequency Bandwidth | Scenario 3 | Scenario 2 |
| Non-chage of Frequency Bandwidth | Scenario 1 | Scenario 4 when subcarrier spacing is changed |

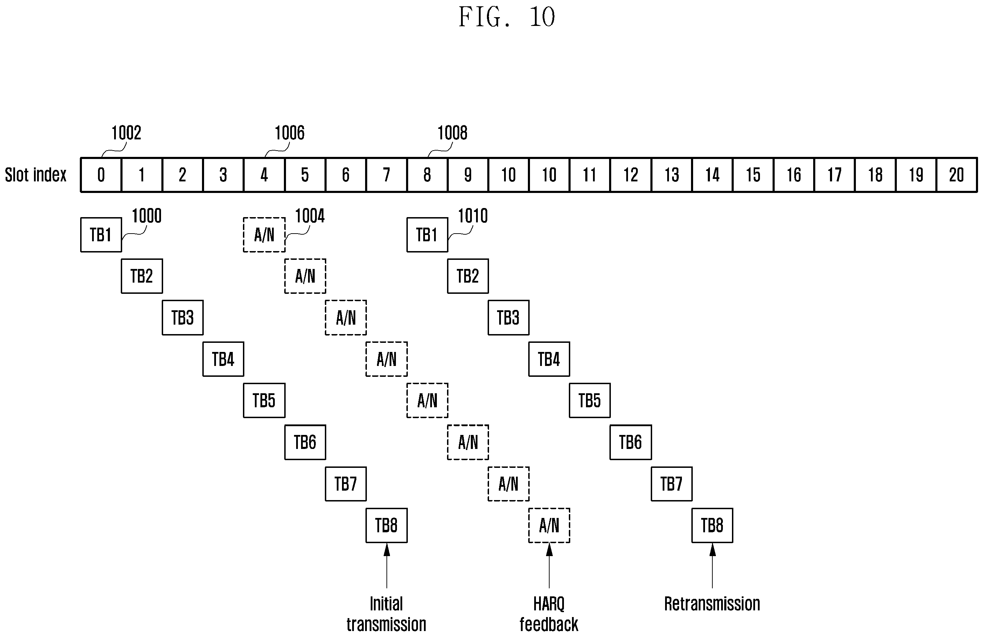

FIG. 10 is a diagram illustrating an example of scheduling and transmitting pieces of data (e.g., TBs) according to slots, receiving a HARQ-ACK feedback for the data, and performing retransmission according to the feedback. In FIG. 10, TB1 1000 is initially transmitted on slot 0 1002, and an ACK/NACK feedback 1004 therefor is transmitted on slot 4 1006. If the initial transmission of TB1 fails, and an NACK is received, a retransmission 1010 of TB1 may be performed on slot 8 1008. In the above description, a time point at which an ACK/NACK feedback is transmitted and a time point at which a retransmission is performed may be predetermined, or may be determined according to a value indicated through control information and/or higher layer signaling.

FIG. 10 illustrates an example in which TB1 to TB8 are sequentially scheduled according to slots from slot 0, and then transmitted. For example, this may indicate that TB1 to TB8 are assigned HARQ process IDs 0 to 7 and then be transmitted. If the number of HARQ process IDs usable by a base station and a terminal is only four, transmission of different consecutive eight TBs may be not possible.

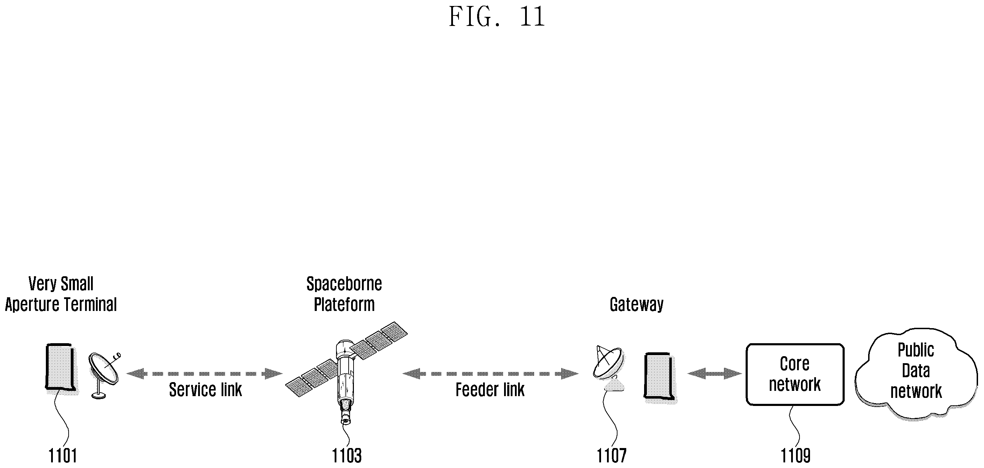

FIG. 11 is a diagram illustrating an example of a communication system using a satellite. For example, when a terminal 1101 transmits a signal to a satellite 1103, the satellite 1103 transfers the signal to a base station 1105, the base station 1105 processes the received signal and transmits a signal including a request for a following operation therefor to the terminal 1101, and the signal may also be transmitted via the satellite 1103. The terminal 1101 and the satellite 1103 are far away from each other, and the satellite 1103 and the base station 1105 are also far away from each other. Therefore, a long time is taken for data transmission or reception from the terminal 1101 to the base station 1105.

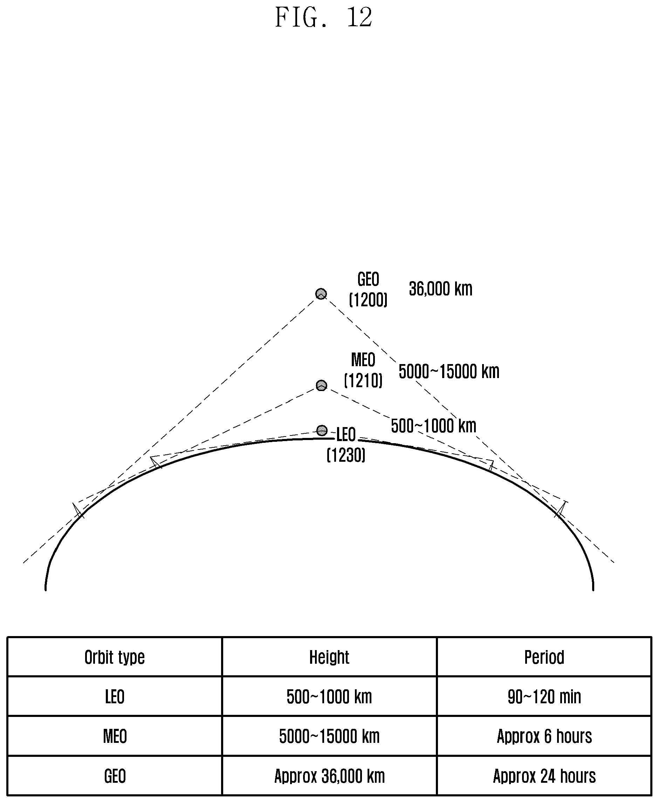

FIG. 12 is a diagram illustrating an orbital period of a communication satellite around the Earth according to the altitude and height of the satellite. Satellites for communication may be classified into a low Earth orbit (LEO) satellite, a middle Earth orbit (MEO) satellite, and a geostationary Earth orbit (GEO) satellite according to the orbit of the satellites. Generally, a GEO 1200 indicates a satellite with an altitude of approximately 36000 km, a MEO 1210 indicates a satellite with an altitude of 5000 to 15000 km, and a LEO indicates a satellite with an altitude of 500 to 1000 km. An orbital period for the Earth changes according to each altitude, the GEO 1200 has an Earth orbital period of approximately 24 hours, the MEO 1210 has about 6 hours, and the LEO 1230 has about 90 to 120 minutes.

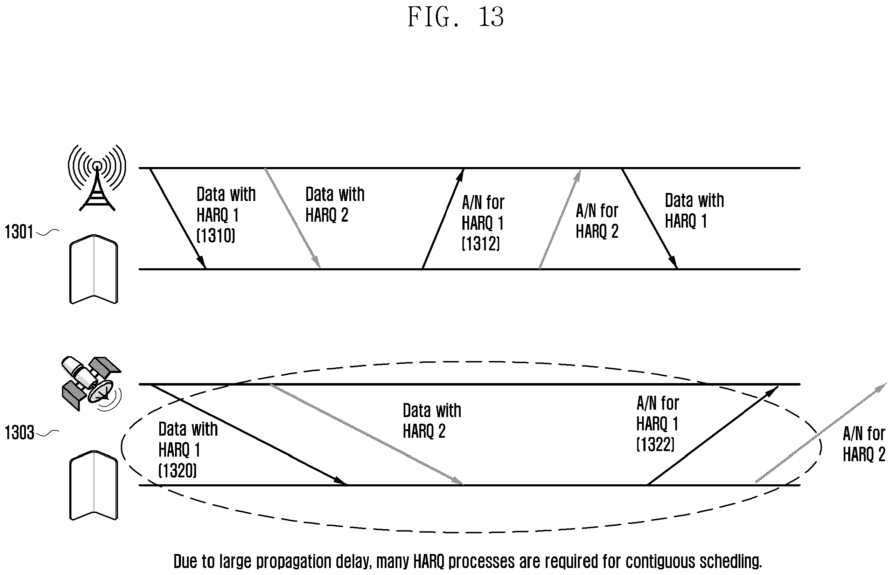

FIG. 13 is a diagram illustrating an example in which a base station transmits data to a terminal, and the terminal transmits an ACK/NACK feedback for the data to the base station. Case 1310 corresponds to a case of a general cellular communication, for example, corresponds to a case where a base station and a terminal perform a direct communication, and case 1303 corresponds to a case where a satellite and a terminal perform a communication. In case 1310, when a base station transmits data related to HARQ process 1 to a terminal (as indicated by reference numeral 1310), the terminal transmits an A/N for the data to the base station (as indicated by reference numeral 1312). Similarly, when a satellite transmits data related to HARQ process 1 to a terminal (as indicated by reference numeral 1320), the terminal transmits an A/N for the data to the satellite (as indicated by reference numeral 1322). As shown in FIG. 13, case 1303 may have a longer propagation delay time compared to case 1301, and accordingly, a time of transferring an ACK/NACK feedback from a terminal to a base station may also be delayed, and thus a retransmission time point may be late. The case of a satellite communication illustrated in FIG. 11 corresponds to a case of a long propagation delay time as in the case 1303, and in a case of a long propagation delay time, a large number of HARQ process IDs may be required for consecutive scheduling and transmission of different pieces of data.

In a wireless communication system, particularly in an LTE or NR system, when data is transmitted from a transmission terminal to a reception terminal, consideration of the size of a soft buffer storing reception values of the data is required. The soft buffer may be a device for a receiver to combine an initial transmission and a retransmission of the same data and attempt to perform decoding.

The HARQ process ID is information for data decoding through combining by a reception terminal at the time of initial transmission and retransmission of data, and informs data to be combined. This information may be indicated in control information, or determined according to a slot number of a slot on which data or control information is transmitted. When there is a large delay time from transmission to reception of data, a large number of HARQ process ID may be required to enable consecutive transmission of different pieces of data.

The disclosure provides a method and a device for, when HARQ processes are operated according to a large number of HARQ process IDs in a situation where a propagation delay time is long as in a satellite communication (non-terrestrial network), efficiently operating the HARQ process IDs. In addition, in a vehicle-to-vehicle communication or V2X, when communication is performed while accessing several terminals, the number of HARQ processes required to be managed by one terminal may increase. Therefore, the method and device proposed in the disclosure may also be applied to a vehicle-to-vehicle communication or V2X.

[First embodiment]

The first embodiment provides a method and device for determining the size (TBS) of a TB.

In order to maintain the size of a soft buffer at a small value so as to operate multiple HARQ processes, making a maximum size of a schedulable TBS small may correspond to one method. In this embodiment, to this end, a method and a device by which a small value may be provided as a maximum allowable TBS value is described.

In this embodiment, a TBS may be calculated by a combination of at least one among the following methods different from a TBS determination method used in a conventional NR system. This operation may be performed by both a base station and a terminal.

Method 1: Scaling may be performed in a process of calculating $N'_{RE}$ in stage 1 for calculating a TBS described above. For example, in stage 1, $N'_{RE}$ may be calculated as in $N'_{RE}=\alpha(N_{sc}^{RB}\cdot N_{symb}^{sh}-N_{DMRS}^{PRB}-N_{oh}^{PRB})$. In this method, a value of $N'_{RE}$ may be reduced by multiplying a number called alpha to the method of calculating $N'_{RE}$, wherein $\alpha$ is smaller than 1 (e.g., $0<\alpha\leq 1$).

Method 2: Scaling may be performed for $n_{PRB}$, which is the number of PRBs, which is used for calculating $N_{RE}$ in stage 1 for calculating a TBS described above. That is, $N_{RE}=\min(156,N'_{RE})\cdot n'_{PRB}$ and $n'_{PRB}=\alpha\cdot n_{PRB}$ may be defined, and $\alpha$ may be predetermined to be a number larger than 0, and equal to or smaller than 1, or may be a value configured by a base station through higher signaling. Alternatively, one of one or more values configured through higher signaling may be indicated by control information such as DCI.

Method 3: Scaling may be performed in a process of calculating $N_{info}$ in stage 2 for calculating a TBS described above. That is, $N_{info}=\alpha\cdot N_{RE}\cdot R\cdot Q_m\cdot v$ may be calculated to determine a small $N_{info}$ compared to a conventional $N_{info}$ calculation method. $\alpha$ may be predetermined to be a number larger than 0, and equal to or smaller than 1, or may be a value configured by a base station or predetermined according to a standard.

The scaling parameter $\alpha$ may be a value of $0<\alpha\leq 1$, and may be configured through higher signaling, may be one value among one or more values configured through higher signaling, the use of which is configured by control information (DCI or a signal such as a MAC CE), or may be a value predetermined according to a standard. In addition, at least one of described methods may be combined and used.

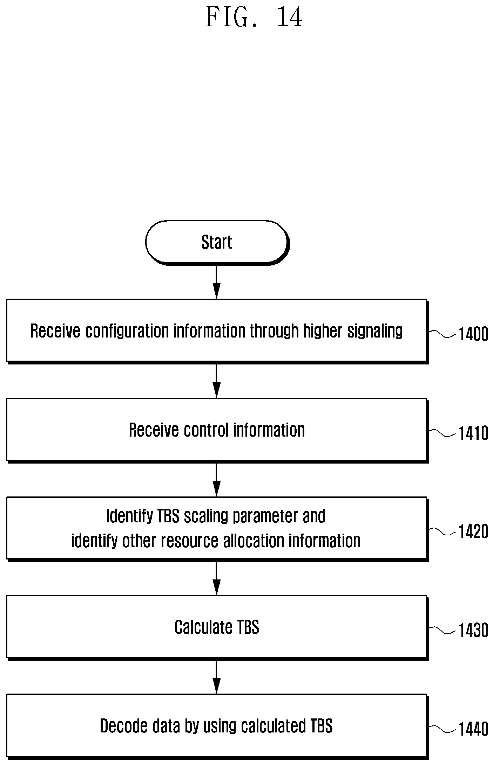

FIG. 14 is a flowchart illustrating a terminal operation in downlink data transmission or reception according to an embodiment of the disclosure.

According to FIG. 14, a terminal receives configuration information from a base station through higher signaling (operation 1400). The configuration information may include parameter candidate values for scaling of a TBS. Thereafter, the terminal receives control information from DCI received from the base station (operation 1410). The control information may be information indicating at least one value among parameters for scaling, which are configured through higher signaling. The terminal identifies a TBS scaling parameter from the received control information, and identifies resource allocation information and pieces of information required for data decoding (operation 1420). The information may include an MCS, an RV, and an NDI. The terminal calculates a TBS by using the identified pieces of information according to a method described in the first embodiment (operation 1430). The terminal may decode data received based on the calculated TBS (operation 1440). In a configured grant or semi-persistent scheduling (SPS), which is a mode in which data is transmitted based on configuration information, operation 1410 may be omitted, and instead, related control information may be obtained based on pre-configured information. The operations of the terminal described with reference to FIG. 14 may be performed in a changed order, or after omitting a particular operation.

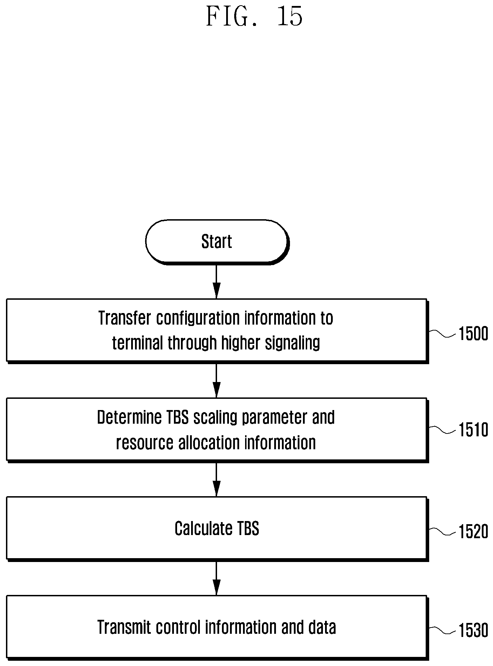

FIG. 15 is a flowchart illustrating a base station operation in downlink data transmission or reception according to an embodiment of the disclosure.

According to FIG. 15, a base station transmits configuration information to a terminal through higher signaling (operation 1500). The configuration information may include parameter candidate values for scaling of a TBS. Thereafter, the base station determines a TBS scaling parameter and resource allocation information for data transmission (operation 1510). The base station calculates a TBS, based on the determined scaling parameter and resource allocation information (operation 1520). The base station may generate control information and data according to the calculated TBS and transmit the same (operation 1530). The control information may include information indicating at least one value among parameters for scaling, which are configured through higher signaling, resource allocation information, and information required for data decoding, and the pieces of information may include an MCS, an RV, and an NDI. In a configured grant or semi-persistent scheduling (SPS), which is a mode in which data is transmitted based on configuration information, transmission of physical layer control information in operation 1530 may be omitted, and the base station may configure related control information in advance through higher layer signaling or/and physical layer control information. The operations of the terminal described with reference to FIG. 15 may be performed in a changed order, or after omitting a particular operation.

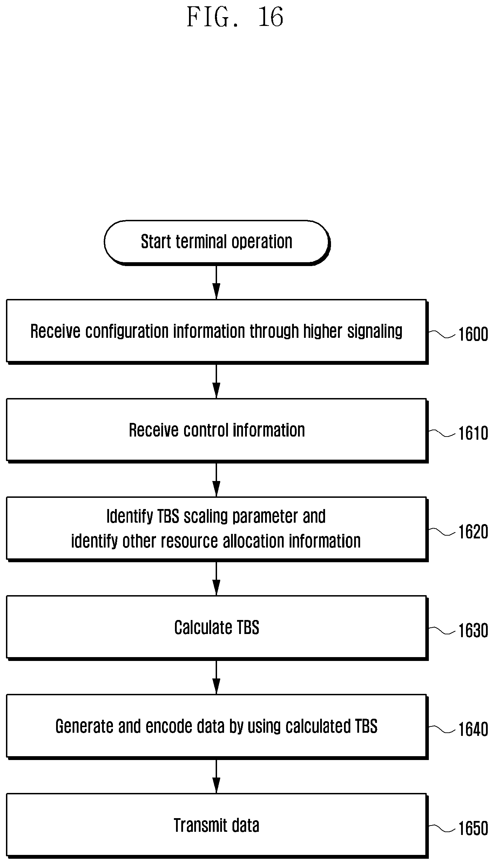

FIG. 16 is a flowchart illustrating a terminal operation in uplink data transmission or reception according to an embodiment of the disclosure.

According to FIG. 16, a terminal receives configuration information from a base station through higher signaling (operation 1600). The configuration information may include parameter candidate values for scaling of a TBS. Thereafter, the terminal receives control information from DCI received from the base station (operation 1610). The control information may be information indicating at least one value among parameters for scaling, which are configured through higher signaling. The terminal identifies a TBS scaling parameter from the received control information, and identifies resource allocation information and pieces of information required for decoding (operation 1620). The information may include an MCS, an RV, and an NDI. The terminal calculates a TBS by using the identified pieces of information (operation 1630). The terminal may generate and encode data to be transmitted, based on the calculated TBS (operation 1640). The terminal transmits the generated and encoded data to the base station (operation 1650). In a configured grant or semi-persistent scheduling (SPS), which is a mode in which data is transmitted based on configuration information, operation 1610 may be omitted, and instead, related control information may be obtained based on pre-configured information. The operations of the terminal described with reference to FIG. 16 may be performed in a changed order, or after omitting a particular operation.

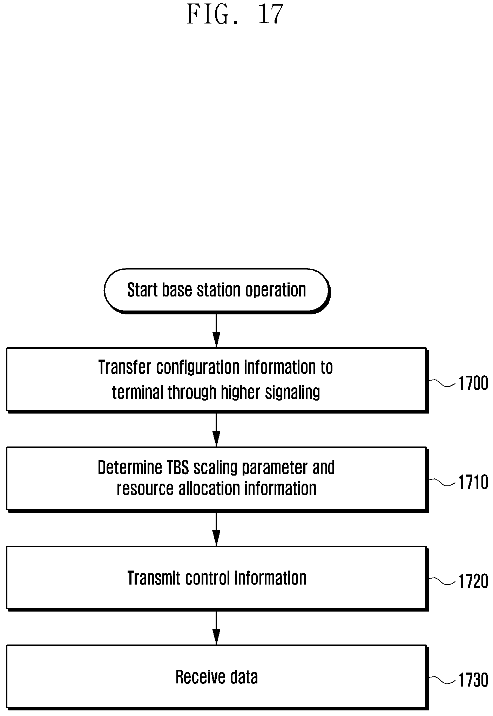

FIG. 17 is a flowchart illustrating a base station operation in uplink data transmission or reception according to an embodiment of the disclosure.

According to FIG. 17, a base station transmits configuration information to a terminal through higher signaling (operation 1700). The configuration information may include parameter candidate values for scaling of a TBS. Thereafter, the base station determines a TBS scaling parameter and resource allocation information for data transmission of the terminal (operation 1710). The control information may include information indicating at least one value among parameters for scaling, which are configured through higher signaling, resource allocation information, and information required for data decoding, and the pieces of information may include an MCS, an RV, and an NDI. The base station transmits control information, based on the determined information (operation 1720). Thereafter, the base station receives data transmitted by the terminal on time and frequency resources according to the control information (operation 1730). In a configured grant or semi-persistent scheduling (SPS), which is a mode in which data is transmitted based on configuration information, transmission of physical layer control information in operation 1720 may be omitted, and the base station may configure related control information in advance through higher layer signaling or/and physical layer control information. The operations of the terminal described with reference to FIG. 17 may be performed in a changed order, or after omitting a particular operation.

The operations in FIG. 14 to FIG. 17 may be performed in a combination of at least one among a case where a terminal has reported, to a base station, that the terminal has a capability to perform satellite communication, a case where a terminal is indicated to perform satellite communication through higher layer signaling or different control information from a base station, or a case where a terminal directly determines to perform satellite communication, based on a predetermined criterion, but the disclosure is not limited thereto.

When the operations of the first embodiment and FIG. 14 to FIG. 17 are applied to a vehicle-to-vehicle communication or V2X, a base station described in the first embodiment and with reference to FIG. 14 to FIG. 17 may be understood as the terminal described above or an RSU.

[Second embodiment]

The second embodiment provides a method and a device for configuring whether to transmit a HARQ ACK/NACK feedback, according to a HARQ process ID.

A base station may configure, for a terminal, when transmitting downlink data to the terminal, whether a HARQ process is an (enabled) HARQ process for which a terminal is required to transmit a HARQ-ACK/NACK feedback or a (disabled) HARQ process for which the terminal is required not to transmit the same, in advance. That is, when data is transmitted using a particular HARQ process, whether to transmit HARQ-ACK feedback information on the corresponding transmission may be configured in advance according to a HARQ process ID value. In this case, storage of received information in a soft buffer is not required even when decoding fails for transmission corresponding to a (disabled) HARQ process ID for which a HARQ-ACK feedback is not used. This is because retransmission of the same data not being performed may be implied.

In such a method, a base station transfers whether to use retransmission, or whether to use a HARQ-ACK feedback to a terminal for every HARQ process ID through higher signaling. The higher signaling includes a bitmap including as many bits as the number of all HARQ process IDs, and each bit of the bitmap may indicate whether a HARQ process having each HARQ process ID is an (enabled) HARQ process or a (disabled) HARQ process.

In a case where a HARQ-ACK feedback is configured to be disabled, and is thus not used, it is possible that a terminal does not include a feedback for data of a corresponding (disabled) HARQ process in a HARQ-ACK codebook in a process of constructing the HARQ-ACK codebook for a base station, or when a feedback for another slot and a feedback for data of a corresponding (disabled) HARQ process are multiplexed and then transmitted together, the terminal configures an NACK for the data of the corresponding disabled HARQ process, multiplexes the same, and then transmits a HARQ-ACK feedback.

When the operations of the second embodiment are applied to a vehicle-to-vehicle communication or V2X, a base station described in the second embodiment may be understood as the terminal described above or an RSU.

[Third embodiment]

The third embodiment provides a method and a device for efficiently managing a soft buffer of a terminal. Satellite communication basically has a shortage of having a long propagation delay time. Therefore, it takes a long time, compared to terrestrial communication, before retransmission is performed according to HARQ-ACK/NACK feedbacks for data transmitted to a terminal after transmission of the feedbacks to a satellite and a base station back. Table 13 below is a table showing a result of calculation of a propagation delay time when a signal is transmitted according to a GEO and a LEO.

【Table 13】

| | GEO at 35786 km | | | LEO at 1200 km | |
|---|---|---|---|---|---|
| Elevation angle | Path | Distance D (km) | Delay (ms) | Distance D (km) | Delay (ms) |
| UE :10° | satellite - UE | 40586 | 135.286 | 3647.5 | 12,158 |
| GW : 5° | satellite - gateway | 41126.6 | 137.088 | 4101.6 | 13.672 |
| 90° | satellite - UE | 35786 | 119.286 | 1500 | 5 |
| Bent Pipe satellite | | | | | |
| One way delay | Gateway-satellite - UE | 81712.6 | 272.375 | 7749.2 | 25.83 |
| Round trip Time | Twice | 163425.3 | 544.751 | 15498.4 | 51.661 |

When data is transmitted and fails to be received as described above, it takes a long time before retransmission is performed, and thus a large number of HARQ processes may be required so as to perform consecutive scheduling. That is, for example, a base station may be generally required not to perform retransmission of the same data before feedback information is received from a terminal, and may schedule and transmit new data. If decoding of transmitted data fails, the terminal may store information of a received signal in a soft buffer, and when retransmission of the corresponding data is received, the terminal may combine a retransmitted signal and the signal transmitted before, and decode the combined signals, so as to increase reception performance. When there are a large number of HARQ processes, a terminal is required to have a larger soft buffer compared to a conventional soft buffer in order to perform the above operation.

In a conventional NR system, the number of HARQ processes used in downlink data transmission may be configured to be 16 or smaller. When a terminal receives data, the terminal may be required to know the number of available HARQ processes. For example, when a terminal transmits one TB to another terminal through a physical sidelink shared channel (PSSCH), the transmission terminal may include a HARQ process ID in sidelink control information (SCI) scheduling the PSSCH. The reception terminal may select a reception method such as HARQ combining, based on a HARQ process ID value that is a HARQ process number obtained after decoding the SCI, a new data indicator (NDI) indicating whether the transmission is a HARQ initial transmission or a retransmission, or a redundancy version (RV) of a HARQ, and then attempts to decode the PSSCH. A bit field including information on a HARQ process number included in SCI may be determined according to a maximum number of HARQ processes, or a total number of HARQ processes. For example, when a maximum number of HARQ processes is 16, a bit field having four bits may indicate HARQ processes numbers. Therefore, for generation and analysis of SCI, a transmission terminal and a reception terminal performing a sidelink communication are required to know information on a maximum number of HARQ processes applied by each other.

Configuration information on a result pool used for a sidelink communication, and different configuration information on the sidelink communication may be pre-installed when a terminal is produced, may be configured by a current base station, may be pre-configured by a different network unit or a different base station before access of the current base station, may be fixed, may be designated (provisioned) by a network, or may be self-constructed by the terminal. In the above case, a terminal is required to have a soft buffer corresponding to a maximum of 16 HARQ processes so as to maximize reception performance.

The above example has been described for a sidelink transmission, but this technology may be applied to transmission between a base station and a terminal. A terminal receives DCI including information on a HARQ process ID, an NDI, and an RV from a base station, and receives data on a PDSCH according to scheduling of the DCI. A bit field including the information on a HARQ process number included in the DCI may be determined according to a maximum number of HARQ processes, or a total number of HARQ processes, and for example, when a maximum number of HARQ processes is 16, a bit field having four bits may indicate HARQ processes numbers. Therefore, when a terminal consecutively receives downlink data from a satellite, the size of a soft buffer for storing a data signal which fails to be decoded may be large. In order to solve this problem, a method for adjusting the size of a soft buffer not to be large will be described.

A soft buffer size required for a terminal may be determined by $TBS_{LBRM}$, and thus at least one or more methods among the following methods and a combination thereof may be applied to calculation of $TBS_{LBRM}$ in order to reduce a soft buffer size of a terminal.

Method 1: Instead of conventional $N_{ref} = \lfloor \frac{TBS_{LBRM}}{C \cdot R_{LBRM}} \rfloor$ as described above, $N_{ref} = \lfloor \frac{\alpha \cdot TBS_{LBRM}}{C \cdot R_{LBRM}} \rfloor$ may be applied using an $\alpha$ value for scaling. $\alpha$ may be determined to be at a level of being greater than 0 and smaller than or equal to 1.

Method 2: Instead of conventional $N_{RE}=156 \cdot n_{PRB}$ as described above, $N_{RE}$ may be calculated by a method such as $N_{RE}=144 \cdot n_{PRB}$, $N_{RE}=132 \cdot n_{PRB}$, or $N_{RE}=120 \cdot n_{PRB}$.

Method 3: $TBS_{LBRM}$ or $N_{REF}$ may be calculated according to a HARQ-ACK feedback configured to be enabled or disabled. A HARQ-ACK feedback may be enabled or disabled for each HARQ process according to a configuration, and this configuration may be configured through higher signaling and/or by DCI received from a base station or SCI received from another terminal. For example, according to the number of HARQ processes for which a HARQ-ACK feedback is enabled, $TBS_{LBRM}$ or $N_{REF}$ may be calculated or an $\alpha$ value in method 1 may be determined. That is, the $\alpha$ value may be calculated by the number of enabled HARQ processes/the number of all HARQ processes.

The scaling parameter $\alpha$ may be a value of $0<\alpha\leq1$, and may be configured through higher signaling, may be one value among one or more values configured through higher signaling, the use of which is configured by control information (DCI or a signal such as a MAC CE), or may be a value predetermined according to a standard. In addition, at least one of described methods may be combined and used.

According to the third embodiment, a terminal may similarly perform the operations in FIG. 14. However, LBRM is applied, and thus a terminal calculates $TBS_{LBRM}$ according to the third embodiment, calculates $N_{cb}$ that is the length of a circular buffer, based on the calculated $TBS_{LBRM}$, determines that a base station has performed rate matching for downlink data, based on the $N_{cb}$, and then has transmitted the data, and decodes downlink data received in operation 1440.

In addition, according to the third embodiment, a base station may similarly perform the operations in FIG. 15. However, LBRM is applied, and thus a base station calculates

$TBS_{LBRM}$ according to the third embodiment, calculates $N_{cb}$ that is the length of a circular buffer, based on the calculated $TBS_{LBRM}$, performs rate matching based on the $N_{cb}$ at the time of generation of downlink data, and then transmits the data to a terminal (operation 1530).

In addition, according to the third embodiment, a terminal may similarly perform the operations in FIG. 16. However, LBRM is applied, and thus a terminal calculates $TBS_{LBRM}$ according to the third embodiment, calculates $N_{cb}$ that is the length of a circular buffer, based on the calculated $TBS_{LBRM}$, performs rate matching based on the $N_{cb}$ at the time of generation of uplink data (operation 1640), and then transmits the data to a base station (operation 1650).

In addition, according to the third embodiment, a base station may similarly perform the operations in FIG. 17. However, LBRM is applied, and thus a base station calculates $TBS_{LBRM}$ according to the third embodiment, calculates $N_{cb}$ that is the length of a circular buffer, based on the calculated $TBS_{LBRM}$, determines that a terminal has performed rate matching for uplink data, based on the $N_{cb}$, and then has transmitted the data, and decodes uplink data received in operation 1730.

When the operations of the second embodiment are applied to a vehicle-to-vehicle communication or V2X, a base station described in the third embodiment may be understood as the terminal described above or an RSU.

[The (3-1)th embodiment]

The (3-1)th embodiment provides a method and a device for efficiently managing a soft buffer of a terminal. This embodiment provides a method for configuring and/or indicating whether a terminal having received data transmits a HARQ-ACK feedback (enabled) or does not transmits a HARQ-ACK feedback (disabled), and a method for managing a soft buffer accordingly.

When downlink data transmission is performed for a terminal, a base station may configure, in advance, whether a particular HARQ process is an (enabled) HARQ process for which a terminal is required to perform a HARQ-ACK feedback for downlink data related to the particular HARQ process (or transmit HARQ-ACK feedback information) or a (disabled) HARQ process for which the terminal is required not to transmit the same. That is, when data is transmitted using a particular HARQ process, whether a terminal is to transmit HARQ-ACK feedback information on the corresponding transmission may be configured in advance according to a HARQ process ID value. This configuration does not require storage of received data in a soft buffer even when decoding fails for transmission corresponding to a (disabled) HARQ process ID for which a HARQ-ACK feedback is not used. This is because retransmission of the same data not being performed may be implied.

In such a method, a base station transfers whether to perform retransmission, and/or whether to perform a HARQ-ACK feedback to a terminal for every HARQ process ID through higher signaling. For example, the higher signaling includes a bitmap including the number of bits equal to or greater than that of all HARQ process IDs, and each bit of the bitmap may indicate whether a HARQ process having each HARQ process ID is an (enabled) HARQ process or a (disabled) HARQ process.

Alternatively, whether to perform retransmission, and/or whether to perform a HARQ-ACK feedback is indicated with respect to every HARQ process ID through DCI or a MAC CE. In this case, it is also possible that a MAC CE includes a bitmap as described above (a bitmap including the number of bits equal to or greater than that of all HARQ process IDs), or DCI includes a particular HARQ process ID and information indicating whether to perform retransmission for the particular HARQ process ID, and/or whether to perform a HARQ-ACK feedback therefor. The information indicating whether to perform retransmission for a particular HARQ process ID, and/or whether to perform a HARQ-ACK feedback therefor may be indicated by a new DCI field or may be included in an existing DCI field. Alternatively, a bitmap as described above is also possible to be included in DCI. Alternatively, a bitmap for a case where whether to perform retransmission and/or whether to perform a HARQ-ACK feedback is enabled, and a bitmap for a case where the same is disabled may exist, or whether the same is enabled and disabled may be indicated by one bitmap.

Alternatively, whether to perform retransmission, and/or whether to perform a HARQ-ACK feedback may be indicated with respect to every HARQ process ID through a combination of higher signaling and a MAC CE and/or DCI, and whether to perform retransmission. The MAC CE and/or DCI may indicate whether to perform retransmission and/or whether to perform a HARQ-ACK feedback with respect to each of the HARQ process IDs of HARQ processes belonging to HARQ process candidates indicated through higher signaling to be enabled or disabled. The number of bits included in a bitmap included in the MAC CE may be equal to or greater than the number of HARQ process candidates indicated through higher layer signaling.

A time point of applying a configuration and an indication for whether a HARQ-ACK feedback and/or retransmission is enabled and disabled for a particular HARQ process ID may be determined by a combination of one or more of time point determination methods as below.

Time point determination method 1: Before a time point at which a terminal receives a signal including configuration or indication information after a base station transmits the same, whether to transmit a HARQ-ACK feedback for transmitted (particular HARQ process-related) downlink data or control information follows a configuration and/or an indication before the time point of transmission of the signal including the configuration or indication information.

For example, when a terminal is indicated by a base station to disable a HARQ-ACK feedback on slot n in a state where a HARQ-ACK feedback of the terminal is enabled, the terminal transmits a HARQ-ACK feedback for downlink data received before slot n to the base station without change, and does not transmit a HARQ-ACK feedback for downlink data received from slot n to the base station.

Time point determination method 2: Whether to transmit a HARQ-ACK feedback for downlink data or control information transmitted before a particular time point after an offset value from a time point at which a terminal receives a signal including MAC CE or physical layer signal (DCI) indication information after a base station transmits the same follows a configuration and/or an indication before the time point of transmission of the signal including the configuration or indication information. An offset for the particular time point after the offset value may be a value configured or fixed through higher signaling of the base station, or may be a value determined according to processing capability of the terminal. For example, the offset value may be predetermined or may be configured according to a subcarrier spacing.

For example, when the offset is k, in a case where a terminal is indicated by a base station to disable a HARQ-ACK feedback on slot n in a state where a HARQ-ACK feedback is enabled for the terminal, the terminal transmits a HARQ-ACK feedback for downlink data received before slot n+k to the base station without change, and does not transmit a HARQ-ACK feedback for downlink data received from slot n+k to the base station. For example, k described above may be fixed to be 6, may be determined according to a subcarrier spacing, or may be configured by the base station.

In a case where a HARQ-ACK feedback is configured for a terminal to be disabled, and is thus not used, it is possible that the terminal does not include a feedback for data of a corresponding (disabled) HARQ process in a HARQ-ACK codebook to be transmitted to a base station in a process of configuring the HARQ-ACK codebook, or when a feedback for another slot and a feedback for data of a corresponding (disabled) HARQ process are multiplexed and then transmitted together, the terminal configures an NACK for the data of the corresponding disabled HARQ process, multiplexes the same, and then transmits a HARQ-ACK feedback.

When the operations of the second embodiment are applied to a vehicle-to-vehicle communication or V2X, a base station described in the second embodiment may be understood as the terminal described above or an RSU. In addition, DCI may be understood to correspond to SCI.

[The (3-2)th embodiment]

The (3-2)th embodiment provides a method and a device for mapping data to be transmitted, with a HARQ process ID.

A base station may configure, for a terminal, whether a HARQ process is an (enabled) HARQ process for which a terminal is required to transmit a HARQ-ACK feedback or a (disabled) HARQ process for which the terminal is required not to transmit the same, in advance when performing downlink data transmission to the terminal. That is, when data is transmitted using a particular HARQ process, whether to transmit HARQ-ACK feedback information on the corresponding transmission may be configured in advance according to a HARQ process ID value.

A set of HARQ processes for which a HARQ-ACK feedback is enabled may be called an enabled set, and a set of HARQ processes for which a HARQ-ACK feedback is disabled may be called a disabled set. An enabled set and a disabled set may each include values of HARQ process IDs of HARQ processes for which a HARQ-ACK feedback is enabled or disabled. A HARQ process ID for data to be transmitted may be determined according to the data to be transmitted.

For example, a HARQ process ID for data may be mapped according to at least one of a QoS value, a required latency condition, or a required reliability condition of the data. For example, when data has a high required latency condition, that is the data is required to be transmitted within a short time, retransmission may not be required, and a HARQ-ACK feedback may not be required accordingly. This type of data may be assigned to a HARQ process for which a HARQ-ACK feedback is disabled, and a HARQ process ID value thereof may be a HARQ process ID value included in a disabled set. When data may require retransmission, or has a required latency condition equal to or greater than a particular value in the example, the data may be assigned to be transmitted to a HARQ process for which a HARQ-ACK feedback is enabled, and a HARQ process ID value thereof may be a HARQ process ID value included in an enabled set. When the one data includes data having different QoS values, required latency conditions, or required reliability conditions, the one data may be assigned to an enabled set or a disabled set according to the highest or lowest QoS value, required latency condition, or required reliability condition among the QoS values, required latency conditions, or required reliability conditions corresponding to the included data.

For example, a QoS value or a priority value to be applied in embodiments of the disclosure may be indicated by a QoS parameter called a 5G QoS identifier (5QI, hereinafter, referred to as "5QI"), for example, in a 5G system. A resource type, a default priority level, a packet delay budget, a packet error rate, a default maximum data burst volume, and a default averaging window may be mapped to one 5QI value, and these values may be defined as shown in Table 14 below.

【Table 14】

| 5QI Value | Resource Type | Default Priority Level | Packet Delay Budget | Packet Error Rate | Default Maximum Data Burst Volume (NOTE 2) | Default Averaging Window | Example Services |
|---|---|---|---|---|---|---|---|
| 1 | GBR | 20 | 100 ms (NOTE 11, NOTE 13) | $10^{-2}$ | N/A | 2000 ms | Conversational Voice |
| 2 | (NOTE 1) | 40 | 150 ms (NOTE 11, NOTE 13) | $10^{-3}$ | N/A | 2000 ms | Conversational Video (Live Streaming) |
| 3 (NOTE 14) | | 30 | 50 ms (NOTE 11, NOTE 13) | $10^{-3}$ | N/A | 2000 ms | Real Time Gaming, V2X messages<br>Electricity distribution – medium voltage, Process automation - monitoring |
| 4 | | 50 | 300 ms (NOTE 11, NOTE 13) | $10^{-6}$ | N/A | 2000 ms | Non-Conversational Video (Buffered Streaming) |
| 65 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 11, NOTE 15) | $10^{-6}$ | N/A | 2000 ms | "Live" Uplink Streaming (e.g. TS 26.238 [76]) |
| 72 | | 56 | 300 ms (NOTE 11, NOTE 15) | $10^{-4}$ | N/A | 2000 ms | "Live" Uplink Streaming (e.g. TS 26.238 [76]) |
| 73 | | 56 | 300 ms (NOTE 11, NOTE 15) | $10^{-8}$ | N/A | 2000 ms | "Live" Uplink Streaming (e.g. TS 26.238 [76]) |
| 74 | | 56 | 500 ms (NOTE 11, NOTE 15) | $10^{-8}$ | N/A | 2000 ms | "Live" Uplink Streaming (e.g. TS 26.238 [76]) |
| 75 | | 56 | 500 ms (NOTE 11, NOTE 15) | $10^{-4}$ | N/A | 2000 ms | "Live" Uplink Streaming (e.g. TS 26.238 [76]) |
| 5 | Non-GBR | 10 | 100 ms NOTE 10, NOTE 13) | $10^{-6}$ | N/A | N/A | IMS Signalling |
| 6 | (NOTE 1) | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice,<br>Video (Live Streaming)<br>Interactive Gaming |
| 8 | | 80 | 300 ms (NOTE 13) | $10^{-6}$ | N/A | N/A | Video (Buffered Streaming) TCP-based (e.g., www, e-mail, chat, ftp, p2p file sharing, progressive video, etc.) |
| 9 | | 90 | | | | | |
| 69 (NOTE 9, NOTE 12) | | 5 | 60 ms (NOTE 7, NOTE 8) | $10^{-6}$ | N/A | N/A | Mission Critical delay sensitive signalling (e.g., MC-PTT signalling) |
| 70 (NOTE 12) | | 55 | 200 ms (NOTE 7, NOTE 10) | $10^{-6}$ | N/A | N/A | Mission Critical Data (e.g. example services are the same as 5QI 6/8/9) |
| 79 | | 65 | 50 ms (NOTE 10, NOTE 13) | $10^{-2}$ | N/A | N/A | V2X messages |
| 80 | | 68 | 10 ms (NOTE 5, NOTE 10) | $10^{-6}$ | N/A | N/A | Low Latency eMBB applications Augmented Reality |

| 82 | Delay Critical GBR | 19 | 10 ms (NOTE 4) | $10^{-4}$ | 255 bytes | 2000 ms | Discrete Automation (see TS 22.261 [2]) |
|---|---|---|---|---|---|---|---|
| 83 | | 22 | 10 ms (NOTE 4) | $10^{-4}$ | 1354 bytes (NOTE 3) | 2000 ms | Discrete Automation (see TS 22.261 [2]) |
| 84 | | 24 | 30 ms (NOTE 6) | $10^{-5}$ | 1354 bytes (NOTE 3) | 2000 ms | Intelligent transport systems (see TS 22.261 [2]) |
| 85 | | 21 | 5 ms (NOTE 5) | $10^{-5}$ | 255 bytes | 2000 ms | Electricity Distribution- high voltage (see TS 22.261 [2]) |

NOTE 1: A packet which is delayed more than PDB is not counted as lost, thus not included in the PER.

NOTE 2: It is required that default MDBV is supported by a PLMN supporting the related 5QIs.

NOTE 3: This MDBV value is set to 1354 bytes to avoid IP fragmentation for the IPv6 based, IPSec protected GTP tunnel to the 5G-AN node (the value is calculated as in Annex C of TS 23.060 [56] and further reduced by 4 bytes to allow for the usage of a GTP-U extension header).

NOTE 4: A delay of 1 ms for the delay between a UPF terminating N6 and a 5G-AN should be subtracted from a given PDB to derive the packet delay budget that applies to the radio interface. When a dynamic CN component of the PDB is used, see clause 5.7.3.4.

NOTE 5: A delay of 2 ms for the delay between a UPF terminating N6 and a 5G-AN should be subtracted from a given PDB to derive the packet delay budget that applies to the radio interface. When a dynamic CN component of the PDB is used, see clause 5.7.3.4.

NOTE 6: A delay of 5 ms for the delay between a UPF terminating N6 and a 5G-AN should be subtracted from a given PDB to derive the packet delay budget that applies to the radio interface. When a dynamic CN component of the PDB is used, see clause 5.7.3.4.

NOTE 7: For Mission Critical services, it may be assumed that the UPF terminating N6 is located "close" to the 5G_AN (roughly 10 ms) and is not normally used in a long distance, home routed roaming situation. Hence delay of 10 ms for the delay between a UPF terminating N6 and a 5G_AN should be subtracted from this PDB to derive the packet delay budget that applies to the radio interface.

NOTE 8: In both RRC Idle and RRC Connected mode, the PDB requirement for these 5QIs can be relaxed (but not to a value greater than 320 ms) for the first packet(s) in a downlink data or signalling burst in order to permit reasonable battery saving (DRX) techniques.

NOTE 9: It is expected that 5QI-65 and 5QI-69 are used together to provide Mission Critical Push to Talk service (e.g., 5QI-5 is not used for signalling). It is expected that the amount of traffic per UE will be similar or less compared to the IMS signalling.

NOTE 10: In both RRC Idle and RRC Connected mode, the PDB requirement for these 5QIs can be relaxed for the first packet(s) in a downlink data or signalling burst in order to permit battery saving (DRX) techniques.

NOTE 11: In RRC Idle mode, the PDB requirement for these 5QIs can be relaxed for the first packet(s) in a downlink data or signalling burst in order to permit battery saving (DRX) techniques.

NOTE 12: This 5QI value can only be assigned upon request from the network side. The UE and any application running on the UE is not allowed to request this 5QI value.

NOTE 13: A delay of 20 ms for the delay between a UPF terminating N6 and a 5G-AN should be subtracted from a given PDB to derive the packet delay budget that applies to the radio interface.

NOTE 14: This 5QI is not supported as it is only used for transmission of V2X messages over MBMS bearers as defined in TS 23.285 [72].

NOTE 15: For "live" uplink streaming (see TS 26.238 [76]), guidelines for PDB values of the different 5QIs correspond to the latency configurations defined in TR 26.939 [77]. In order to support higher latency reliable streaming services (above 500ms PDB), if different PDB and PER combinations are needed these configurations will have to use non-standardised 5QIs.

In Table 14, for example, it may be noted that a 5QI value of 82 is mapped with parameters such as a resource type of a delay critical guaranteed bit rate (GBR), a default priority level of 19, a packet delay budget of 10 ms, a packet error rate of $10^{-4}$, and a default maximum data burst volume of 255 bytes.

For example, data having a 5QI value corresponding to 1 to 79 may be assigned to a HARQ process for which a HARQ-ACK feedback is enabled, and data having a 5QI value corresponding to 80 or greater may be assigned to a HARQ process for which a HARQ-ACK feedback is disabled. Alternatively, it is also possible to determine an enabled set or disabled set of HARQ processes to which data is to be assigned, based on at least one of a priority level or a packet delay budget as well as a 5QI value.

In the above description, for convenience of explanation, the first to the third embodiment, the (3-1)th embodiment, and the (3-2)th embodiment of the disclosure have been separately described, but each embodiment includes operations related to each other, and thus it is possible to combine and configure at least two or more embodiments.

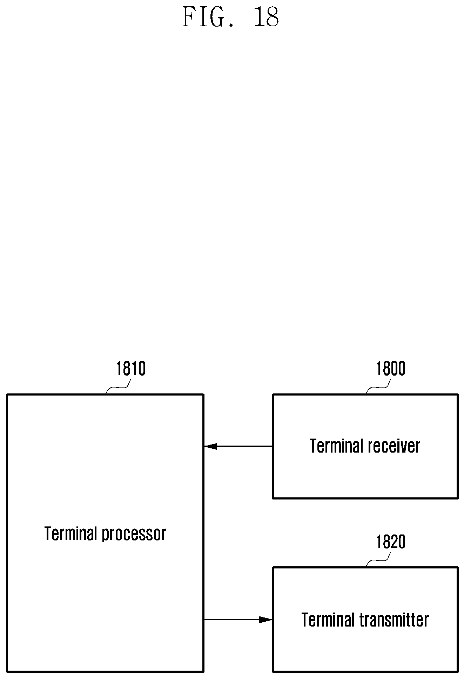

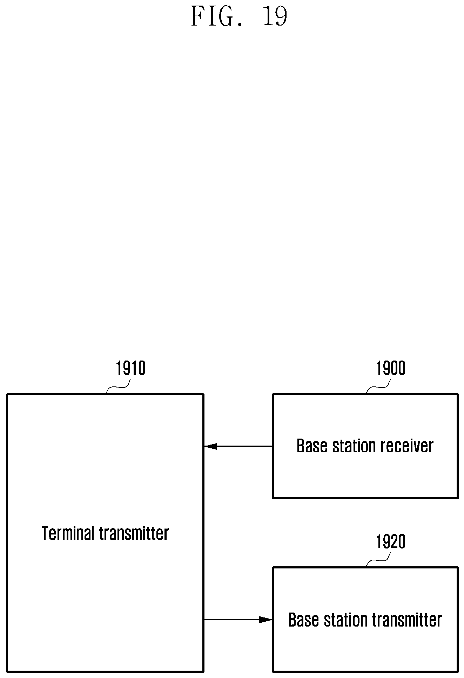

FIGS. 18 and 19 illustrate transmitters, receivers, and processors of a terminal and a base station to perform the embodiments of the disclosure, respectively. The first embodiment to the third embodiment show a transmission or reception method of a base station and a terminal or a transmission terminal and a reception terminal to perform an operation for determination of signal transmission or reception. To perform the method, receivers, processors, and transmitters of a terminal and a base station are each required to operate according to an embodiment.

FIG. 18 is a block diagram showing an internal structure of a terminal according to an embodiment of the disclosure. As illustrated in FIG. 18, a terminal of the disclosure may include a terminal receiver 1800, a terminal transmitter 1820, and a terminal processor 1810. The terminal receiver 1800 and the terminal transmitter 1820 may be collectively referred to as a transceiver in an embodiment of the disclosure. The transceiver may transmit or receive a signal to or from a base station. The signal may include control information and data. To this end, the transceiver may include an RF transmitter that up-converts and amplifies a frequency of a transmitted signal, an RF receiver that low-noise amplifies a received signal and down-converts the frequency, and the like. In addition, the transceiver may receive a signal through a wireless channel and output the signal to the terminal processor 1810, and may transmit a signal output from the terminal processor 1810, through a wireless channel. The terminal processor 1810 may control a series of processes so as to allow the terminal to operate according to an embodiment of the disclosure described above. For example, the terminal receiver 1800 may receive control information from a base station through a downlink, and the terminal processor 1810 may determine a HARQ ID according to the control information and prepare for transmission or reception accordingly. Thereafter, the terminal transmitter 1820 may transfer scheduled data to the base station.

FIG. 19 is a block diagram showing an internal structure of a base station according to an embodiment of the disclosure. As illustrated in FIG. 19, a base station of the disclosure may include a base station receiver 1900, a base station transmitter 1920, and a base station processor 1910. The base station receiver 1900 and the base station transmitter 1920 may be collectively referred to as a transceiver in an embodiment. The transceiver may transmit or receive a signal to or from a terminal. The signal may include control information and data. To this end, the transceiver may include an RF transmitter that up-converts and amplifies a frequency of a transmitted signal, an RF receiver that low-noise amplifies a received signal and down-converts the frequency, and the like. In addition, the transceiver may receive a signal through a wireless channel and output the signal to the base station processor 1910, and may transmit a signal output from the base station processor 1910, through a wireless channel. The base station processor 1910 may control a series of processes so as to allow the base station to operate according to an embodiment of the disclosure described above. For example, the base station processor 1910 may transmit a downlink control signal to a terminal if necessary according to configuration information configured by the base station processor. Thereafter, the base station transmitter 1920 transmits related scheduling control information and data, and the base station receiver 1900 receives feedback information from the terminal.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Further, the above respective embodiments may be employed in combination, as necessary. In addition, other variants based on the technical idea of the embodiments may be implemented in other systems such as 5G and NR systems.

## Claims

**1.** A method performed by a terminal in a communication system, the method comprising:

receiving, from a base station, a bitmap indicating whether a hybrid automatic repeat request, HARQ, feedback of each of a plurality of HARQ processes is enabled or disabled;
identifying that the HARQ feedback of each of the plurality of HARQ processes is enabled or disabled based on the bitmap;
identifying an HARQ-acknowledgement, HARQ-ACK, codebook including a plurality of HARQ-ACK bits in response to downlink data; and
transmitting, to the base station, the HARQ-ACK codebook,
wherein an HARQ-ACK bit in response to downlink data associated with a HARQ process of a disabled HARQ feedback is set as NACK in the HARQ-ACK codebook.

**2.** The method of claim 1, further comprising:
skipping of storing the downlink data associated with the disabled HARQ process, in case that decoding of the downlink data is failed.

**3.** A terminal of a communication system, the terminal comprising:

a transceiver; and
a controller coupled with the transceiver and configured to:

receive, from a base station, a bitmap indicating whether a hybrid automatic repeat request, HARQ, feedback of each of a plurality of HARQ processes is enabled or disabled,
identify that the HARQ feedback of each of the plurality of HARQ processes is enabled or disabled based on the bitmap,
identify an HARQ-acknowledgement, HARQ-ACK, codebook including a plurality of HARQ-ACK bits in response to downlink data, and
transmit, to the base station, the HARQ-ACK codebook,
wherein an HARQ-ACK bit in response to downlink data associated with a HARQ process of a disabled HARQ feedback is set as NACK in the HARQ-ACK codebook.

**4.** The terminal of claim 3, wherein the controller is further configured to skip to store the downlink data associated with the disabled HARQ process, in case that decoding of the downlink data is failed.

**5.** The method of claim 1 or the terminal of claim 3, wherein a length of the bitmap is equal to or greater than that of all HARQ processes.

**6.** The method of claim 1 or the terminal of claim 3, wherein each bit included in the bitmap indicates whether the HARQ feedback of each of the plurality of HARQ processes is enabled or disabled.

**7.** A method performed a base station in a communication system, the method comprising:

transmitting, to a terminal, a bitmap indicating whether a hybrid automatic repeat request, HARQ, feedback of each of a plurality of HARQ processes is enabled or disabled; and
receiving, from the terminal, an HARQ-acknowledgement, HARQ-ACK, codebook including a plurality of HARQ-ACK bits in response to downlink data,
wherein a HARQ-ACK bit in response to downlink data associated with a HARQ process of a disabled HARQ feedback corresponds to NACK in the HARQ-ACK codebook.

**8.** A base station of a communication system, the base station comprising:

a transceiver; and
a controller coupled with the transceiver and configured to:

transmit, to a terminal, a bitmap indicating whether a hybrid automatic repeat request, HARQ, feedback of each of a plurality of HARQ processes is enabled or disabled, and
receive, from the terminal, an HARQ-acknowledgement, HARQ-ACK, codebook including a plurality of HARQ-ACK bits in response to downlink data,
wherein a HARQ-ACK bit in response to downlink data associated with a HARQ process of a disabled HARQ feedback corresponds to NACK in the HARQ-ACK codebook.

**9.** The method of claim 7 or the base station of claim 8, wherein a length of the bitmap is equal to or greater than that of all HARQ processes.

**10.** The method of claim 7 or the base station of claim 8, wherein each bit included in the bitmap indicates whether the HARQ feedback of each of the plurality of HARQ processes is enabled or disabled.

**Patentansprüche**

**1.** Verfahren, das von einem Endgerät in einem Kommunikationssystem durchgeführt wird, wobei das Verfahren Folgendes umfasst:

Empfangen, von einer Basisstation, einer Bitmap, die angibt, ob eine Rückmeldung für eine hybride automatische Wiederholungsanforderung, HARQ, von jedem einer Vielzahl von HARQ-Prozessen aktiviert oder deaktiviert ist;
Identifizieren, dass eine HARQ-Rückmeldung von jedem der Vielzahl von HARQ-Prozessen aktiviert oder deaktiviert ist, basierend auf der Bitmap;
Identifizieren eines HARQ-Bestätigungs-, HARQ-ACK, -Codebuchs mit einer Vielzahl von HARQ-ACK-Bits als Reaktion auf Downlink-Daten; und
Übertragen des HARQ-ACK-Codebuchs an die Basisstation,
wobei ein HARQ-ACK-Bit als Reaktion auf Downlink-Daten, die mit einem HARQ-Prozess einer deaktivierten HARQ-Rückmeldung assoziiert sind, als NACK in dem HARQ-ACK-Codebuch gesetzt wird.

**2.** Verfahren nach Anspruch 1, ferner umfassend:
Überspringen des Speicherns der Downlink-Daten, die mit dem deaktivierten HARQ-Prozess assoziiert sind, falls Decodieren der Downlink-Daten fehlschlägt.

**3.** Endgerät in einem Kommunikationssystems, wobei das Endgerät Folgendes umfasst:

einen Transceiver; und
eine Steuerung, die mit dem Transceiver gekoppelt ist und konfiguriert ist zum:

Empfangen, von einer Basisstation, einer Bitmap, die angibt, ob eine Rückmeldung für eine hybride automatische Wiederholungsanforderung, HARQ, von jedem einer Vielzahl von HARQ-Prozessen aktiviert oder deaktiviert ist,
Identifizieren, dass eine HARQ-Rückmeldung von jedem der Vielzahl von HARQ-Prozessen aktiviert oder deaktiviert ist, basierend auf der Bitmap,

Identifizieren eines HARQ-Bestätigungs-, HARQ-ACK, -Codebuchs mit einer Vielzahl von HARQ-ACK-Bits als Reaktion auf Downlink-Daten, und
Übertragen des HARQ-ACK-Codebuchs an die Basisstation,
wobei ein HARQ-ACK-Bit als Reaktion auf Downlink-Daten, die mit einem HARQ-Prozess einer deaktivierten HARQ-Rückmeldung assoziiert sind, als NACK in dem HARQ-ACK-Codebuch gesetzt wird.

4. Endgerät nach Anspruch 3, wobei die Steuerung ferner konfiguriert ist zum Überspringen des Speicherns der Downlink-Daten, die mit dem deaktivierten HARQ-Prozess assoziiert sind, falls Decodieren der Downlink-Daten fehlschlägt.

5. Verfahren nach Anspruch 1 oder Endgerät nach Anspruch 3, wobei eine Länge der Bitmap gleich oder größer ist als die aller HARQ-Prozesse.

6. Verfahren nach Anspruch 1 oder Endgerät nach Anspruch 3, wobei jedes in der Bitmap enthaltene Bit angibt, ob die HARQ-Rückmeldung von jedem der Vielzahl von HARQ-Prozessen aktiviert oder deaktiviert ist.

7. Verfahren, das von einer Basisstation in einem Kommunikationssystem durchgeführt wird, wobei das Verfahren Folgendes umfasst:

Übertragen, an ein Endgerät, einer Bitmap, die angibt, ob eine Rückmeldung für eine hybride automatische Wiederholungsanforderung, HARQ, von jedem einer Vielzahl von HARQ-Prozessen aktiviert oder deaktiviert ist; und
Empfangen, von dem Endgerät, eines HARQ-Bestätigungs-, HARQ-ACK, -Codebuchs mit einer Vielzahl von HARQ-ACK-Bits als Reaktion auf Downlink-Daten,
wobei ein HARQ-ACK-Bit als Reaktion auf Downlink-Daten, die mit einem HARQ-Prozess einer deaktivierten HARQ-Rückmeldung assoziiert sind, NACK in dem HARQ-ACK-Codebuch entspricht.

8. Basisstation eines Kommunikationssystems, wobei die Basisstation Folgendes umfasst:

einen Transceiver; und
eine Steuerung, die mit dem Transceiver gekoppelt ist und konfiguriert ist zum:

Übertragen, an ein Endgerät, einer Bitmap, die angibt, ob eine Rückmeldung für eine hybride automatische Wiederholungsanforderung, HARQ, von jedem einer Vielzahl von HARQ-Prozessen aktiviert oder deaktiviert ist, und
Empfangen, von dem Endgerät, eines HARQ-Bestätigungs-, HARQ-ACK, -Codebuchs mit einer Vielzahl von HARQ-ACK-Bits als Reaktion auf Downlink-Daten,
wobei ein HARQ-ACK-Bit als Reaktion auf Downlink-Daten, die mit einem HARQ-Prozess einer deaktivierten HARQ-Rückmeldung assoziiert sind, NACK in dem HARQ-ACK-Codebuch entspricht.

9. Verfahren nach Anspruch 7 oder Basisstation nach Anspruch 8, wobei eine Länge der Bitmap gleich oder größer ist als die aller HARQ-Prozesse.

10. Verfahren nach Anspruch 7 oder Basisstation nach Anspruch 8, wobei jedes in der Bitmap enthaltene Bit angibt, ob die HARQ-Rückmeldung von jedem der Vielzahl von HARQ-Prozessen aktiviert oder deaktiviert ist.

## Revendications

1. Procédé exécuté par un terminal dans un système de communication, le procédé comprenant :

recevoir, en provenance d'une station de base, un bitmap indiquant si une rétroaction de demande de répétition hybride automatique, HARQ, de chacun d'une pluralité de processus HARQ est activée ou désactivée ;
identifier que la rétroaction HARQ de chacun de la pluralité de processus HARQ est activée ou désactivée en se basant sur le bitmap ;
identifier un livre de codes d'accusé de réception HARQ, HARQ-ACK, comprenant une pluralité de bits HARQ-ACK en réponse à des données de liaison descendante ; et
transmettre, à la station de base, le livre de codes HARQ-ACK,

dans lequel un bit HARQ-ACK en réponse à des données de liaison descendante associées à un processus HARQ d'une rétroaction HARQ désactivée est défini comme NACK dans le livre de codes HARQ-ACK.

**2.** Procédé de la revendication 1, comprenant en outre :
omettre le stockage des données de liaison descendante associées au processus HARQ désactivé, en cas d'échec du décodage des données de liaison descendante.

**3.** Terminal d'un système de communication, le terminal comprenant :

un émetteur-récepteur ; et
une commande couplée à l'émetteur-récepteur et configurée pour :

recevoir, en provenance d'une station de base, un bitmap indiquant si une rétroaction de demande de répétition hybride automatique, HARQ, de chacun d'une pluralité de processus HARQ est activée ou désactivée,
identifier que la rétroaction HARQ de chaque pluralité de processus HARQ est activée ou désactivée en se basant sur le bitmap,
identifier un livre de codes d'accusé de réception HARQ, HARQ-ACK, comprenant une pluralité de bits HARQ-ACK en réponse à des données de liaison descendante, et
transmettre, à la station de base, le livre de codes HARQ-ACK,
dans lequel un bit HARQ-ACK en réponse à des données de liaison descendante associées à un processus HARQ d'une rétroaction HARQ désactivée est défini comme NACK dans le livre de codes HARQ-ACK.

**4.** Terminal de la revendication 3, dans lequel la commande est en outre configurée pour omettre le stockage des données de liaison descendante associées au processus HARQ désactivé, en cas d'échec du décodage des données de liaison descendante.

**5.** Procédé de la revendication 1 ou le terminal de la revendication 3, dans lequel une longueur du bitmap est égale ou supérieure à celle de tous les processus HARQ.

**6.** Procédé de la revendication 1 ou le terminal de la revendication 3, dans lequel chaque bit inclus dans le bitmap indique si la rétroaction HARQ de chacun de la pluralité de processus HARQ est activée ou désactivée.

**7.** Procédé exécuté par une station de base dans un système de communication, le procédé comprenant :

transmettre, à un terminal, un bitmap indiquant si une rétroaction de demande de répétition hybride automatique, HARQ, de chacun d'une pluralité de processus HARQ est activée ou désactivée ; et
recevoir, depuis le terminal, un livre de codes HARQ d'accusé de réception, HARQ-ACK, comprenant une pluralité de bits HARQ-ACK en réponse à des données de liaison descendante,
dans lequel un bit HARQ-ACK en réponse à des données de liaison descendante associées à un processus HARQ d'une rétroaction HARQ désactivée correspond à NACK dans le livre de codes HARQ-ACK.

**8.** Station de base d'un système de communication, la station de base comprenant :

un émetteur-récepteur ; et
une commande couplée à l'émetteur-récepteur et configurée pour :
transmettre, à un terminal, un bitmap indiquant si une rétroaction de demande de répétition hybride automatique, HARQ, de chacun d'une pluralité de processus HARQ est activée ou désactivée, et
recevoir, depuis le terminal, un livre de codes HARQ d'accusé de réception, HARQ-ACK, comprenant une pluralité de bits HARQ-ACK en réponse à des données de liaison descendante,
dans lequel un bit HARQ-ACK en réponse à des données de liaison descendante associées à un processus HARQ d'une rétroaction HARQ désactivée correspond à NACK dans le livre de codes HARQ-ACK.

**9.** Procédé de la revendication 7 ou la station de base de la revendication 8, dans lequel/laquelle une longueur du bitmap est égale ou supérieure à celle de tous les processus HARQ.

**10.** Procédé de la revendication 7 ou la station de base de la revendication 8, dans lequel/laquelle chaque bit inclus dans le bitmap indique si la rétroaction HARQ de chacun de la pluralité de processus HARQ est activée ou désactivée.

FIG. 1

Radio frame (114)
......
Slot
(106)
Resource element
(112)
$N_{BW}$
subcarriers
(104)
$N_{RB}$
subcarriers
(110)
Resource block
(108)
$N_{symb}$ OFDM symbols
(102)

FIG. 2

203
201
205
207
time
frequency
URLLC
URLLC
eMBB
URLLC
System
Bandwidth
(200)
mMTC
209

FIG. 3

310
312
314
time
frequency
URLLC
URLLC
URLLC
eMBB
mMTC
(304)
(302)
(306)
System Bandwidth (300)
308
316

FIG. 4

Add CRC to TB and then divide into multiple CBs (405)
Add CRC to each CB (415)
401
Transport block (TB)
403
CRC
407
Code block (CB) 1
409
Code block (CB) 2
...
411
Code block (CB) N-1
413
Code block (CB) N
Code block (CB) 1
CRC
417
Code block (CB) 2
CRC
419
...
Code block (CB) N-1
CRC
421
Code block (CB) N
CRC
423

FIG. 5A

505
503
501
507
509

FIG. 5B

UE-A (520)
UE-B (530)
PC5 Signaling Protocol (522)
PC5-RRC (524)
PDCP
MAC
PHY
PC5 Signaling Protocol (532)
PC5-RRC (534)
PDCP
MAC
PHY

FIG. 5C

553
557
561
Groupcasting
555
551
559

563
565

FIG. 6

603
607
611
HARQ-ACK feedback
605
601
609

FIG. 7

701
705
703
239
192
182
Subcarrier number
56
47
0
PSS
PBCH
SSS
PBCH
12 RBs
20 RBs
4 OFDM symbols
NR
f
t
SCS
Bandwidth
15 kHz
3.6 MHz
30 kHz
7.2 MHz
120 kHz
28.8 MHz
240 kHz
57.6 MHz

FIG. 8

1ms
15kHz 0 1 2 3 4 5 6 7 8 9 10 11 12 13
30kHz(1) 0 1 2 3 4 5 6 7 8 9 10 11 12 13 0 1 2 3 4 5 6 7 8 9 10 11 12 13
30kHz(2) 0 1 2 3 4 5 6 7 8 9 10 11 12 13 0 1 2 3 4 5 6 7 8 9 10 11 12 13
0.25ms
60KHz 0 1 2 3 4 5 6 7 8 9 10 11 12 13
120kHz(1) 0 1 2 3 4 5 6 7 8 9 10 11 12 13 0 1 2 3 4 5 6 7 8 9 10 11 12 13
240kHz(2) 0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13

FIG. 9

First signal
(902)
Second signal
(908)
gNB Tx/Rx
n
n+1
n+2
n+3
n+4
n+5
n+6
n+7
904
UE Rx
n
n+1
n+2
n+3
n+4
n+5
n+6
n+7
propagation delay = T P
(910)
906
UE Tx
n
n+1
n+2
n+3
n+4
n+5
n+6
n+7
Timing advance = T A
(912)
UE processing time for preparation for
transmission of second signal
(914)

FIG. 10

1002
1006
1008
Slot index
0
1
2
3
4
5
6
7
8
9
10
10
11
12
13
14
15
16
17
18
19
20
1000
1004
1010
TB1
TB2
TB3
TB4
TB5
TB6
TB7
TB8
A/N
Initial transmission
HARQ feedback
Retransmission

Very Small
Aperture Terminal
1101
Service link
Spaceborne
Plateform
1103
Feeder link
Gateway
1107
Core
network
1109
Public
Data
network

FIG. 11

FIG. 12

GEO
(1200)
36,000 km
MEO
(1210)
5000~15000 km
500~1000 km
LEO
(1230)

| Orbit type | Height | Period |
|---|---|---|
| LEO | 500~1000 km | 90~120 min |
| MEO | 5000~15000 km | Approx 6 hours |
| GEO | Approx 36,000 km | Approx 24 hours |

FIG. 13
1301
Data with HARQ 1 (1310)
Data with HARQ 2
A/N for HARQ 1 (1312)
A/N for HARQ 2
Data with HARQ 1
1303
Data with HARQ 1 (1320)
Data with HARQ 2
A/N for HARQ 1 (1322)
A/N for HARQ 2
Due to large propagation delay, many HARQ processes are required for contiguous scheduling.

FIG. 14

Start
Receive configuration information through higher signaling
1400
Receive control information
1410
Identify TBS scaling parameter and
identify other resource allocation information
1420
Calculate TBS
1430
Decode data by using calculated TBS
1440

FIG. 15

Start
Transfer configuration information to terminal through higher signaling
1500
Determine TBS scaling parameter and resource allocation information
1510
Calculate TBS
1520
Transmit control information and data
1530

FIG. 16

Start terminal operation
Receive configuration information through higher signaling
1600
Receive control information
1610
Identify TBS scaling parameter and
identify other resource allocation information
1620
Calculate TBS
1630
Generate and encode data by using calculated TBS
1640
Transmit data
1650

FIG. 17

Start base station operation
Transfer configuration information to terminal through higher signaling
1700
Determine TBS scaling parameter and resource allocation information
1710
Transmit control information
1720
Receive data
1730

FIG. 18

1810
1800
Terminal receiver
Terminal processor
1820
Terminal transmitter

FIG. 19

1910
1900
Base station receiver
Terminal transmitter
1920
Base station transmitter

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- 3GPP TSG RAN WG1 Meeting #99. *R1-1913369*